# EUROPEAN PATENT APPLICATION

(11) **EP 4 199 523 A1**
(43) Date of publication of application: **21.06.2023**
(21) Application number: 21865829.2
(22) Date of filing: 19.08.2021
(51) Int. Cl.: H04N 21/43, G06F 3/14

(54) **MULTI-WINDOW SCREEN PROJECTION METHOD AND ELECTRONIC DEVICE**

(30) Priority: 10.09.2020 CN 202010949156
(71) Applicant: Huawei Technologies Co., Ltd., Shenzhen, Guangdong 518129 (CN)
(72) Inventor: CHEN, Chen, Shenzhen, Guangdong 518129 (CN); GUO, Ruishuai, Shenzhen, Guangdong 518129 (CN); HU, Qianqiao, Shenzhen, Guangdong 518129 (CN)
(74) Representative: Pfenning, Meinig & Partner mbB
(86) International application number: PCT/CN2021/113506
(87) International publication number: WO 2022/052773

(57) **Abstract**

This application relates to the field of electronic technologies and discloses a multi-window projection method and an electronic device, to ensure smoothness and definition of a projected picture by relieving image processing load of an electronic device during multi-window projection. In this application, in a process of accepting projection by a first device, a second device obtains first information, to adaptively adjust one or more of a frame rate corresponding to a projected interface, a size of an application display region corresponding to a projected interface, display resolution of the second device, or video resolution corresponding to a projected interface. In this way, an image processing resource and a processing capability of the device can be allocated on demand, to ensure smoothness and definition of a projected picture and reduce load of the second device. Alternatively, when a processing capability of the second device is limited, smoothness and definition of a projected picture are ensured.

## Description

This application claims priority to Chinese Patent Application No. 202010949156.X, filed with the China National Intellectual Property Administration on September 10, 2020 and entitled "MULTI-WINDOW PROJECTION METHOD AND ELECTRONIC DEVICE", which is incorporated herein by reference in its entirety.

### TECHNICAL FIELD

Embodiments of this application relate to the field of electronic technologies, and in particular, to a multi-window projection method and an electronic device.

### BACKGROUND

With development of application display technologies, more and more electronic devices support a multi-window projection technology. In the multi-window projection technology, interfaces of a plurality of applications started on one electronic device (for example, a first device) are projected onto another electronic device (for example, a second device), to implement mirror control and input collaboration on the first device and the second device.

In a conventional multi-window projection technology, a plurality of application interfaces are usually projected onto a second device at a constant frame rate (frames per second, FPS) and resolution. Based on the conventional multi-window projection technology, when the plurality of application interfaces are simultaneously rendered on the second device, usage of a graphics processing unit (graphics processing unit, GPU) is usually very high (for example, the usage often reaches 80% or more), and throughput pressure of a communication resource (for example, a wireless fidelity (wireless fidelity, Wi-Fi) resource) is also relatively high. The preceding problems may cause system stuttering, resulting in freezing or unsmoothness of a projected picture and affecting user experience.

### SUMMARY

Embodiments of this application provide a multi-window projection method and an electronic device, to ensure smoothness and definition of a projected picture by relieving image processing load of an electronic device during multi-window projection.

To achieve the foregoing objective, the following technical solutions are used in embodiments of this application.

According to a first aspect, a multi-window projection method is provided. The method is applied to a scenario in which a first device performs projection onto a second device. The method includes: The second device obtains first information when displaying a first interface synchronously with the first device, where the first interface includes a plurality of application interfaces. The second device adaptively adjusts, based on the obtained first information, one or more of the following: frame rates corresponding to the plurality of application interfaces, sizes of application display regions corresponding to the plurality of application interfaces, display resolution of the second device, or video resolution corresponding to the plurality of application interfaces.

According to the technical solution provided in the first aspect, in a process of accepting projection by the first device, the second device obtains the first information, to adaptively adjust one or more of a frame rate corresponding to a projected interface, a size of an application display region corresponding to a projected interface, the display resolution of the second device, or video resolution corresponding to a projected interface. In this way, an image processing resource and a processing capability of the device can be allocated on demand, to ensure smoothness and definition of a projected picture and reduce load of the second device. Alternatively, when a processing capability of the second device is limited, smoothness and definition of a projected picture are ensured.

In a possible implementation, the first information includes window statuses corresponding to the plurality of application interfaces. The first information is specifically used by the second device to adaptively adjust the frame rates corresponding to the plurality of application interfaces. The window statuses include a focus window, a non-minimized and non-focus window, and a minimized window. In a process of accepting projection by the first device, the second device obtains the window statuses corresponding to the plurality of application interfaces, to adaptively adjust the frame rate corresponding to the projected interface. In this way, the image processing resource and the processing capability of the device can be allocated on demand, to ensure the smoothness and the definition of the projected picture.

In a possible implementation, that the second device adaptively adjusts, based on the obtained window statuses corresponding to the plurality of application interfaces, the frame rates corresponding to the plurality of application interfaces includes: The second device adaptively adjusts the frame rates corresponding to the plurality of application interfaces based on the following first preset policy: a frame rate corresponding to the focus window > a frame rate corresponding to the non-minimized and non-focus window > a frame rate corresponding to the minimized window. The second device adaptively adjusts, based on the preset policy and different window statuses, the frame rate corresponding to the projected interface, to ensure the smoothness and the definition of the projected picture.

In a possible implementation, the first information includes application categories corresponding to the plurality of application interfaces. The first information is specifically used by the second device to adaptively adjust the frame rates corresponding to the plurality of application interfaces. The application categories include one or more of a game category, a video category, an instant messaging category, an office category, a social category, a life category, a shopping category, and a function category. In a process of accepting projection by the first device, the second device obtains the application categories corresponding to the plurality of application interfaces, to adaptively adjust the frame rate corresponding to the projected interface. In this way, the image processing resource and the processing capability of the device can be allocated on demand, to ensure the smoothness and the definition of the projected picture.

In a possible implementation, the application categories include the game category, the video category, and the instant messaging category. That the second device adaptively adjusts, based on the obtained application categories corresponding to the plurality of application interfaces, the frame rates corresponding to the plurality of application interfaces includes: The second device adaptively adjusts the frame rates corresponding to the plurality of application interfaces based on the following second preset policy: a frame rate corresponding to a game category application interface > a frame rate corresponding to a video category application interface > a frame rate corresponding to an instant messaging category application interface. The second device adaptively adjusts, based on the preset policy and different application categories, the frame rate corresponding to the projected interface, to ensure the smoothness and the definition of the projected picture.

In a possible implementation, that the second device obtains first information when displaying a first interface synchronously with the first device includes: If it is determined that processing load of the second device is higher than a preset threshold, the second device obtains the first information when displaying the first interface synchronously with the first device. The solution provided in this application may be implemented based on that the processing load of the second device is higher than the preset threshold. By using the solution, the smoothness and the definition of the projected picture can be ensured when the processing capability of the second device is limited.

In a possible implementation, the second device determines, based on one or more of the following, that the processing load of the second device is higher than the preset threshold: A decoding delay of a GPU of the second device is greater than a delay threshold, a load rate of the GPU is greater than a load threshold, and a quantity of the plurality of application interfaces is greater than a quantity threshold. In the solution provided in this application, whether the processing load of the second device is higher than the preset threshold may be determined by determining whether the decoding delay of the GPU is greater than the delay threshold, whether the load rate of the GPU is greater than the load threshold, and whether the quantity of the plurality of application interfaces is greater than the quantity threshold.

In a possible implementation, the first information includes the quantity of the plurality of application interfaces. The first information is specifically used by the second device to adaptively adjust one or more of the following: the sizes of the application display regions corresponding to the plurality of application interfaces, the display resolution of the second device, or the video resolution corresponding to the plurality of application interfaces. In a process of accepting projection by the first device, the second device obtains the quantity of the plurality of application interfaces, to adaptively adjust the frame rate corresponding to the projected interface. In this way, the image processing resource and the processing capability of the device can be allocated on demand, to ensure the smoothness and the definition of the projected picture.

In a possible implementation, if the quantity of the plurality of application interfaces is one, the second device determines that the size of the application display region corresponding to the application interface is a₁×b₁, the display resolution of the second device is a₂×b₂, and the video resolution corresponding to the plurality of application interfaces is a₃×b₃, where a₁ is a length of the application display region, and bi is a width of the application display region; a₂ is a quantity of pixels that can be displayed in horizontal dimension on a display of the second device, and b₂ is a quantity of pixels that can be displayed in vertical dimension on the display of the second device; and as is a quantity of pixels that can be displayed in an image per unit area in horizontal dimension, b₃ is a quantity of pixels that can be displayed in an image per unit area in vertical dimension, a₃=a₂, and b₃=b₂.

In a possible implementation, if the quantity of the plurality of application interfaces is two, the second device determines that the size of the application display region corresponding to the application interface is 2a₁×b₁, the display resolution of the second device is a₂×2b₂, and the video resolution corresponding to the plurality of application interfaces is a₃×b₃, where 2a₁ is a length of the application display region, and bi is a width of the application display region; a₂ is a quantity of pixels that can be displayed in horizontal dimension on a display of the second device, and 2b₂ is a quantity of pixels that can be displayed in vertical dimension on the display of the second device; and as is a quantity of pixels that can be displayed in an image per unit area in horizontal dimension, b₃ is a quantity of pixels that can be displayed in an image per unit area in vertical dimension, a₃=a₂/2, and b₃=b₂.

In a possible implementation, if the quantity of the plurality of application interfaces is three, the second device determines that the size of the application display region corresponding to the application interface is 3a₁×b₁, the display resolution of the second device is a₂×3b₂, and the video resolution corresponding to the plurality of application interfaces is a₃×b₃, where 3a₁ is a length of the application display region, and bi is a width of the application display region; a₂ is a quantity of pixels that can be displayed in horizontal dimension on a display of the second device, and 3b₂ is a quantity of pixels that can be displayed in vertical dimension on the display of the second device; and as is a quantity of pixels that can be displayed in an image per unit area in horizontal dimension, b₃ is a quantity of pixels that can be displayed in an image per unit area in vertical dimension, a₃=a₂/2, and b₃=3b₂/2.

According to a second aspect, an electronic device is provided. The electronic device includes: a processing unit, configured to: obtain first information when the electronic device displays a first interface synchronously with a first device, where the first interface includes a plurality of application interfaces; and adaptively adjust, based on the obtained first information, one or more of the following: frame rates corresponding to the plurality of application interfaces, sizes of application display regions corresponding to the plurality of application interfaces, display resolution of a second device, or video resolution corresponding to the plurality of application interfaces.

According to the technical solution provided in the second aspect, in a process of accepting projection by the first device, the second device obtains the first information, to adaptively adjust one or more of a frame rate corresponding to a projected interface, a size of an application display region corresponding to a projected interface, the display resolution of the second device, or video resolution corresponding to a projected interface. In this way, an image processing resource and a processing capability of the device can be allocated on demand, to ensure smoothness and definition of a projected picture and reduce load of the second device. Alternatively, when a processing capability of the second device is limited, smoothness and definition of a projected picture are ensured.

In a possible implementation, the first information includes window statuses corresponding to the plurality of application interfaces. The first information is specifically used by the second device to adaptively adjust the frame rates corresponding to the plurality of application interfaces. The window statuses include a focus window, a non-minimized and non-focus window, and a minimized window. In a process of accepting projection by the first device, the second device obtains the window statuses corresponding to the plurality of application interfaces, to adaptively adjust the frame rate corresponding to the projected interface. In this way, the image processing resource and the processing capability of the device can be allocated on demand, to ensure the smoothness and the definition of the projected picture.

In a possible implementation, that the processing unit adaptively adjusts, based on the obtained window statuses corresponding to the plurality of application interfaces, the frame rates corresponding to the plurality of application interfaces includes: The processing unit adaptively adjusts the frame rates corresponding to the plurality of application interfaces based on the following first preset policy: a frame rate corresponding to the focus window > a frame rate corresponding to the non-minimized and non-focus window > a frame rate corresponding to the minimized window. The second device adaptively adjusts, based on the preset policy and different window statuses, the frame rate corresponding to the projected interface, to ensure the smoothness and the definition of the projected picture.

In a possible implementation, the first information includes application categories corresponding to the plurality of application interfaces. The first information is specifically used by the second device to adaptively adjust the frame rates corresponding to the plurality of application interfaces. The application categories include one or more of a game category, a video category, an instant messaging category, an office category, a social category, a life category, a shopping category, and a function category. In a process of accepting projection by the first device, the second device obtains the application categories corresponding to the plurality of application interfaces, to adaptively adjust the frame rate corresponding to the projected interface. In this way, the image processing resource and the processing capability of the device can be allocated on demand, to ensure the smoothness and the definition of the projected picture.

In a possible implementation, the application categories include the game category, the video category, and the instant messaging category. That the processing unit adaptively adjusts, based on the obtained application categories corresponding to the plurality of application interfaces, the frame rates corresponding to the plurality of application interfaces includes: The processing unit adaptively adjusts the frame rates corresponding to the plurality of application interfaces based on the following second preset policy: a frame rate corresponding to a game category application interface > a frame rate corresponding to a video category application interface > a frame rate corresponding to an instant messaging category application interface. The second device adaptively adjusts, based on the preset policy and different application categories, the frame rate corresponding to the projected interface, to ensure the smoothness and the definition of the projected picture.

In a possible implementation, that the processing unit obtains the first information when the electronic device displays the first interface synchronously with the first device includes: If it is determined that processing load of the second device is higher than a preset threshold, the processing unit obtains the first information when the electronic device displays the first interface synchronously with the first device. The solution provided in this application may be implemented based on that the processing load of the second device is higher than the preset threshold. By using the solution, the smoothness and the definition of the projected picture can be ensured when the processing capability of the second device is limited.

In a possible implementation, the processing unit determines, based on one or more of the following, that the processing load of the second device is higher than the preset threshold: A decoding delay of a GPU of the second device is greater than a delay threshold, a load rate of the GPU is greater than a load threshold, and a quantity of the plurality of application interfaces is greater than a quantity threshold. In the solution provided in this application, whether the processing load of the second device is higher than the preset threshold may be determined by determining whether the decoding delay of the GPU is greater than the delay threshold, whether the load rate of the GPU is greater than the load threshold, and whether the quantity of the plurality of application interfaces is greater than the quantity threshold.

In a possible implementation, the first information includes the quantity of the plurality of application interfaces. The first information is specifically used by the second device to adaptively adjust one or more of the following: the sizes of the application display regions corresponding to the plurality of application interfaces, the display resolution of the second device, or the video resolution corresponding to the plurality of application interfaces. In a process of accepting projection by the first device, the second device obtains the quantity of the plurality of application interfaces, to adaptively adjust the frame rate corresponding to the projected interface. In this way, the image processing resource and the processing capability of the device can be allocated on demand, to ensure the smoothness and the definition of the projected picture.

In a possible implementation, if the quantity of the plurality of application interfaces is one, the second device determines that the size of the application display region corresponding to the application interface is a₁×b₁, the display resolution of the second device is a₂×b₂, and the video resolution corresponding to the plurality of application interfaces is a₃×b₃, where a₁ is a length of the application display region, and bi is a width of the application display region; a₂ is a quantity of pixels that can be displayed in horizontal dimension on a display of the second device, and b₂ is a quantity of pixels that can be displayed in vertical dimension on the display of the second device; and as is a quantity of pixels that can be displayed in an image per unit area in horizontal dimension, b₃ is a quantity of pixels that can be displayed in an image per unit area in vertical dimension, a₃=a₂, and b₃=b₂.

In a possible implementation, if the quantity of the plurality of application interfaces is two, the second device determines that the size of the application display region corresponding to the application interface is 2a₁×b₁, the display resolution of the second device is a₂×2b₂, and the video resolution corresponding to the plurality of application interfaces is a₃×b₃, where 2a₁ is a length of the application display region, and bi is a width of the application display region; a₂ is a quantity of pixels that can be displayed in horizontal dimension on a display of the second device, and 2b₂ is a quantity of pixels that can be displayed in vertical dimension on the display of the second device; and as is a quantity of pixels that can be displayed in an image per unit area in horizontal dimension, b₃ is a quantity of pixels that can be displayed in an image per unit area in vertical dimension, a₃=a₂/2, and b₃=b₂.

In a possible implementation, if the quantity of the plurality of application interfaces is three, the second device determines that the size of the application display region corresponding to the application interface is 3a₁×b₁, the display resolution of the second device is a₂×3b₂, and the video resolution corresponding to the plurality of application interfaces is a₃×b₃, where 3a₁ is a length of the application display region, and bi is a width of the application display region; a₂ is a quantity of pixels that can be displayed in horizontal dimension on a display of the second device, and 3b₂ is a quantity of pixels that can be displayed in vertical dimension on the display of the second device; and as is a quantity of pixels that can be displayed in an image per unit area in horizontal dimension, b₃ is a quantity of pixels that can be displayed in an image per unit area in vertical dimension, a₃=a₂/2, and b₃=3b₂/2.

According to a third aspect, an electronic device is provided. The electronic device includes: a memory, configured to store a computer program; a transceiver, configured to receive or send a radio signal; and a processor, configured to: execute the computer program, so that the electronic device obtains first information when the electronic device displays a first interface synchronously with a first device, where the first interface includes a plurality of application interfaces; and adaptively adjust, based on the obtained first information, one or more of the following: frame rates corresponding to the plurality of application interfaces, sizes of application display regions corresponding to the plurality of application interfaces, display resolution of a second device, or video resolution corresponding to the plurality of application interfaces.

According to the technical solution provided in the third aspect, in a process of accepting projection by the first device, the second device obtains the first information, to adaptively adjust one or more of a frame rate corresponding to a projected interface, a size of an application display region corresponding to a projected interface, the display resolution of the second device, or video resolution corresponding to a projected interface. In this way, an image processing resource and a processing capability of the device can be allocated on demand, to ensure smoothness and definition of a projected picture and reduce load of the second device. Alternatively, when a processing capability of the second device is limited, smoothness and definition of a projected picture are ensured.

In a possible implementation, the first information includes window statuses corresponding to the plurality of application interfaces. The first information is specifically used by the second device to adaptively adjust the frame rates corresponding to the plurality of application interfaces. The window statuses include a focus window, a non-minimized and non-focus window, and a minimized window. In a process of accepting projection by the first device, the second device obtains the window statuses corresponding to the plurality of application interfaces, to adaptively adjust the frame rate corresponding to the projected interface. In this way, the image processing resource and the processing capability of the device can be allocated on demand, to ensure the smoothness and the definition of the projected picture.

In a possible implementation, the processor is configured to execute the computer program, so that the electronic device adaptively adjusts the frame rates corresponding to the plurality of application interfaces based on the following first preset policy: a frame rate corresponding to the focus window > a frame rate corresponding to the non-minimized and non-focus window > a frame rate corresponding to the minimized window. The second device adaptively adjusts, based on the preset policy and different window statuses, the frame rate corresponding to the projected interface, to ensure the smoothness and the definition of the projected picture.

In a possible implementation, the first information includes application categories corresponding to the plurality of application interfaces. The first information is specifically used by the second device to adaptively adjust the frame rates corresponding to the plurality of application interfaces. The application categories include one or more of a game category, a video category, an instant messaging category, an office category, a social category, a life category, a shopping category, and a function category. In a process of accepting projection by the first device, the second device obtains the application categories corresponding to the plurality of application interfaces, to adaptively adjust the frame rate corresponding to the projected interface. In this way, the image processing resource and the processing capability of the device can be allocated on demand, to ensure the smoothness and the definition of the projected picture.

In a possible implementation, the application categories include the game category, the video category, and the instant messaging category. The processor is configured to execute the computer program, so that the electronic device adaptively adjusts the frame rates corresponding to the plurality of application interfaces based on the following second preset policy: a frame rate corresponding to a game category application interface > a frame rate corresponding to a video category application interface > a frame rate corresponding to an instant messaging category application interface. The second device adaptively adjusts, based on the preset policy and different application categories, the frame rate corresponding to the projected interface, to ensure the smoothness and the definition of the projected picture.

In a possible implementation, the processor is configured to execute the computer program, so that if it is determined that processing load of the second device is higher than a preset threshold, the electronic device obtains the first information when the electronic device displays the first interface synchronously with the first device. The solution provided in this application may be implemented based on that the processing load of the second device is higher than the preset threshold. By using the solution, the smoothness and the definition of the projected picture can be ensured when the processing capability of the second device is limited.

In a possible implementation, the processor determines, based on one or more of the following, that the processing load of the second device is higher than the preset threshold: A decoding delay of a GPU of the second device is greater than a delay threshold, a load rate of the GPU is greater than a load threshold, and a quantity of the plurality of application interfaces is greater than a quantity threshold. In the solution provided in this application, whether the processing load of the second device is higher than the preset threshold may be determined by determining whether the decoding delay of the GPU is greater than the delay threshold, whether the load rate of the GPU is greater than the load threshold, and whether the quantity of the plurality of application interfaces is greater than the quantity threshold.

In a possible implementation, the first information includes the quantity of the plurality of application interfaces. The first information is specifically used by the second device to adaptively adjust one or more of the following: the sizes of the application display regions corresponding to the plurality of application interfaces, the display resolution of the second device, or the video resolution corresponding to the plurality of application interfaces. In a process of accepting projection by the first device, the second device obtains the quantity of the plurality of application interfaces, to adaptively adjust the frame rate corresponding to the projected interface. In this way, the image processing resource and the processing capability of the device can be allocated on demand, to ensure the smoothness and the definition of the projected picture.

In a possible implementation, if the quantity of the plurality of application interfaces is one, the second device determines that the size of the application display region corresponding to the application interface is a₁×b₁, the display resolution of the second device is a₂×b₂, and the video resolution corresponding to the plurality of application interfaces is a₃×b₃, where a₁ is a length of the application display region, and bi is a width of the application display region; a₂ is a quantity of pixels that can be displayed in horizontal dimension on a display of the second device, and b₂ is a quantity of pixels that can be displayed in vertical dimension on the display of the second device; and as is a quantity of pixels that can be displayed in an image per unit area in horizontal dimension, b₃ is a quantity of pixels that can be displayed in an image per unit area in vertical dimension, a₃=a₂, and b₃=b₂.

In a possible implementation, if the quantity of the plurality of application interfaces is two, the second device determines that the size of the application display region corresponding to the application interface is 2a₁×b₁, the display resolution of the second device is a₂×2b₂, and the video resolution corresponding to the plurality of application interfaces is a₃×b₃, where 2a₁ is a length of the application display region, and bi is a width of the application display region; a₂ is a quantity of pixels that can be displayed in horizontal dimension on a display of the second device, and 2b₂ is a quantity of pixels that can be displayed in vertical dimension on the display of the second device; and as is a quantity of pixels that can be displayed in an image per unit area in horizontal dimension, b₃ is a quantity of pixels that can be displayed in an image per unit area in vertical dimension, a₃=a₂/2, and b₃=b₂.

In a possible implementation, if the quantity of the plurality of application interfaces is three, the second device determines that the size of the application display region corresponding to the application interface is 3a₁×b₁, the display resolution of the second device is a₂×3b₂, and the video resolution corresponding to the plurality of application interfaces is a₃×b₃, where 3a₁ is a length of the application display region, and bi is a width of the application display region; a₂ is a quantity of pixels that can be displayed in horizontal dimension on a display of the second device, and 3b₂ is a quantity of pixels that can be displayed in vertical dimension on the display of the second device; and as is a quantity of pixels that can be displayed in an image per unit area in horizontal dimension, b₃ is a quantity of pixels that can be displayed in an image per unit area in vertical dimension, a₃=a₂/2, and b₃=3b₂/2.

According to a fourth aspect, a computer-readable storage medium is provided. The computer-readable storage medium stores computer program code, and when the computer program code is executed by a processor, the method according to any possible implementation of the first aspect is implemented.

According to a fifth aspect, a chip system is provided. The chip system includes a processor and a memory, where the memory stores computer program code, and when the computer program code is executed by the processor, the method according to any possible implementation of the first aspect is implemented. The chip system may include a chip, or include a chip and another discrete component.

According to a sixth aspect, a computer program product is provided. When the computer program product runs on a computer, the method according to any possible implementation of the first aspect is implemented.

### BRIEF DESCRIPTION OF DRAWINGS

FIG. 1A to FIG. 1C are an example diagram of a multi-window projection scenario according to an embodiment of this application;
FIG. 2A to FIG. 2C are an example diagram of another multi-window projection scenario according to an embodiment of this application;
FIG. 3 is a schematic diagram of a hardware structure of a first device according to an embodiment of this application;
FIG. 4 is a schematic diagram of a hardware structure of a second device according to an embodiment of this application;
FIG. 5 is a schematic diagram of software interaction existing when a first device performs projection onto a second device according to an embodiment of this application;
FIG. 6 is a schematic diagram of a process in which a first device performs projection onto a second device;
FIG. 7 is a flowchart 1 of a multi-window projection method according to an embodiment of this application;
FIG. 8 is a schematic diagram 1 of a multi-window collaborative projection process according to an embodiment of this application;
FIG. 9 is a flowchart 2 of a multi-window projection method according to an embodiment of this application;
FIG. 10 is a flowchart 3 of a multi-window projection method according to an embodiment of this application;
FIG. 11 is a schematic diagram 2 of a multi-window collaborative projection process according to an embodiment of this application;
FIG. 12 is a schematic diagram 3 of a multi-window collaborative projection process according to an embodiment of this application;
FIG. 13 is a flowchart 4 of a multi-window projection method according to an embodiment of this application;
FIG. 14 is a flowchart 5 of a multi-window projection method according to an embodiment of this application;
FIG. 15A and FIG. 15B are a schematic diagram 4 of a multi-window collaborative projection process according to an embodiment of this application;
FIG. 16 is a block diagram of a structure of an electronic device according to an embodiment of this application;
FIG. 17 is a block diagram of a structure of another electronic device according to an embodiment of this application; and
FIG. 18 is a schematic diagram of a structure of an electronic device according to an embodiment of this application.

### DESCRIPTION OF EMBODIMENTS

The following describes the technical solutions in embodiments of this application with reference to the accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly indicate or implicitly include one or more such features. In the descriptions of embodiments, unless otherwise specified, "a plurality of" means two or more.

Embodiments of this application provide a multi-window projection method. The method is implemented based on a multi-window projection technology. The multi-window projection technology means that a plurality of application interfaces are displayed on a plurality of devices in a mirror manner by using an established communication connection between devices (for example, a first device and a second device). Based on mirror display of the plurality of application interfaces on the plurality of devices, a cross-device multi-screen collaborative interaction function is implemented through mirror control and input collaboration.

In some embodiments, based on the mirror display of the plurality of application interfaces on the plurality of devices, a cross-device and cross-system multi-screen collaborative interaction function may be further implemented through the mirror control and the input collaboration.

For example, after the communication connection for multi-window projection is established between the first device and the second device, the second device may display a plurality of application interfaces started on the first device synchronously. A user may operate the application interfaces by using hardware (such as a keyboard, a mouse, a microphone, or a speaker) of the second device. In addition, the user may open a new application interface by using the first device or the second device, to further synchronize the new application interface to the second device. In addition, the user may further complete, on the second device, a function such as fast sharing data with the first device.

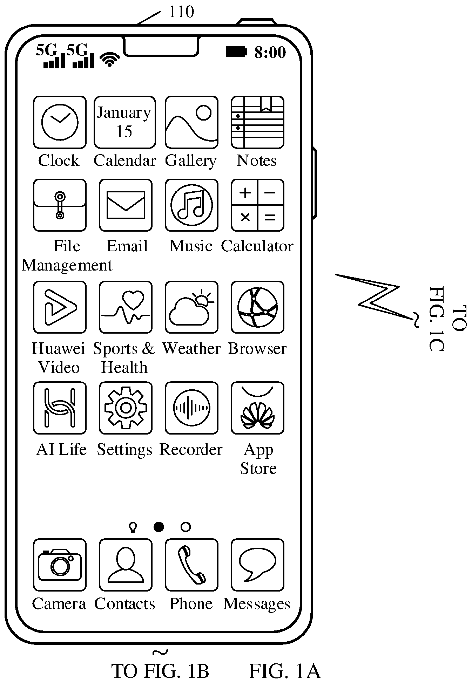

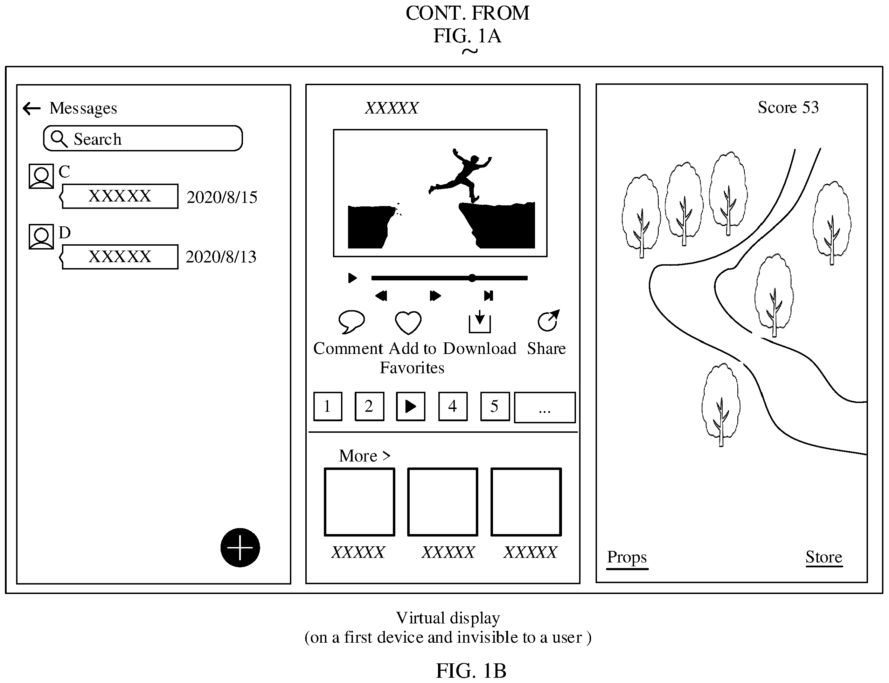

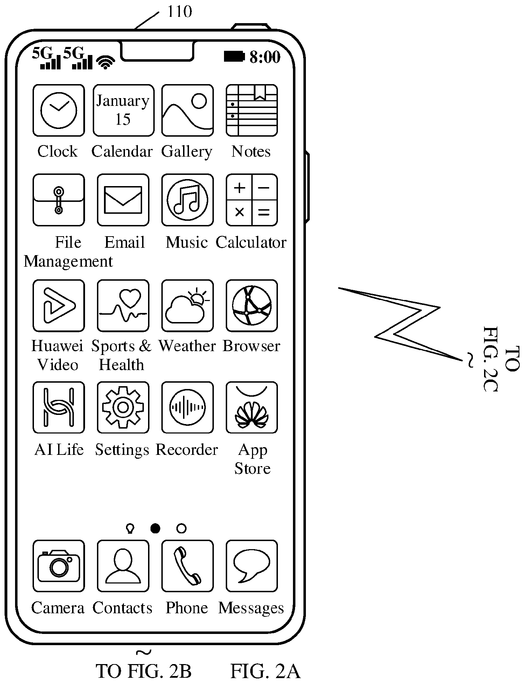

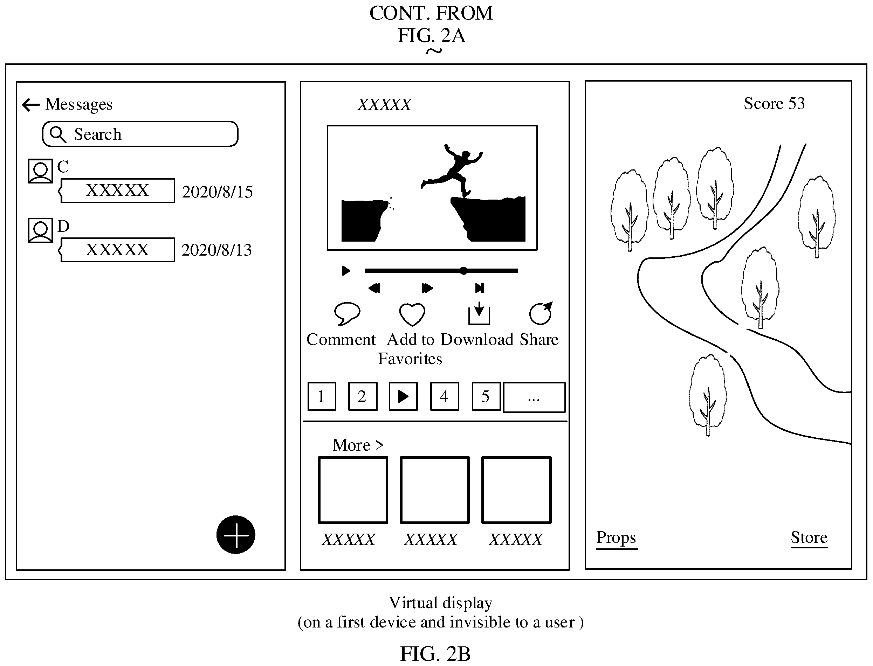

FIG. 1A to FIG. 1C and FIG. 2A to FIG. 2C are example diagrams of two multi-window projection scenarios. As shown in FIG. 1A to FIG. 1C and FIG. 2A to FIG. 2C, it is assumed that a communication connection for multi-window projection is established between a smartphone 110 (that is, the first device) and a notebook computer 120 (that is, the second device). In the multi-window projection scenario, it is assumed that when displaying a mobile phone home screen, the smartphone 110 receives a start operation performed by the user on an SMS message application, a video application, and a game application in the smartphone 110. In response to the start operation performed by the user on the SMS message application, the video application, and the game application, the smartphone 110 starts a projection interface in a form of a free floating window, that is, the SMS message application, the video application, and the game application. Then, the smartphone 110 renders the free-floating-window application interfaces and the mobile phone home screen of the smartphone 110 together. A part of the free-floating-window application interfaces are rendered and sent to a main display (main display) of the smartphone 110 for display, and another part of the free-floating-window application interfaces are rendered on a virtual display (virtual display) of the mobile phone 110. In addition, the smartphone 110 encodes a surface corresponding to the interface rendered on the virtual display into a standard video stream and transmits the standard video stream to the notebook computer 120, to implement collaborative display of a plurality of windows (that is, windows of a plurality of application interfaces) on the smartphone 110 (that is, the first device) and the notebook computer 120 (that is, the second device). In some embodiments, the smartphone 110 may further encode surfaces corresponding to all interfaces rendered on the main display and the virtual display into a standard video stream, and transmit the standard video stream to the notebook computer 120. Based on the collaborative display of the plurality of windows on the first device and the second device, the user may collaboratively control, by using the first device and the second device, the plurality of application interfaces started on the first device.

An interface that is sent by the smartphone 110 (that is, the first device) to the main display of the smartphone 110 for display may be referred to as a default interface. For example, the default interface may be a preset interface, such as the mobile phone home screen (as shown in FIG. 1A and FIG. 2A), a setting interface, or a tool interface. Alternatively, the default interface may be a user-defined interface or the like. This is not limited in this application.

In embodiments of this application, depending on different projection requirements, multi-window projection manners may include same-source projection and different-source projection.

The same-source projection means that interfaces of a plurality of applications started on the first device are projected onto the second device in a manner of expanding a screen. In the same-source projection manner, the first device sends, to the second device by using one channel of encoding, the standard video stream obtained by encoding the surfaces corresponding to all application interfaces rendered on the main display and the virtual display, to display, on a display of the second device, all application interfaces (which include the default interface) rendered on the virtual display. The default interface may be understood as an interface sent to the first device for display.

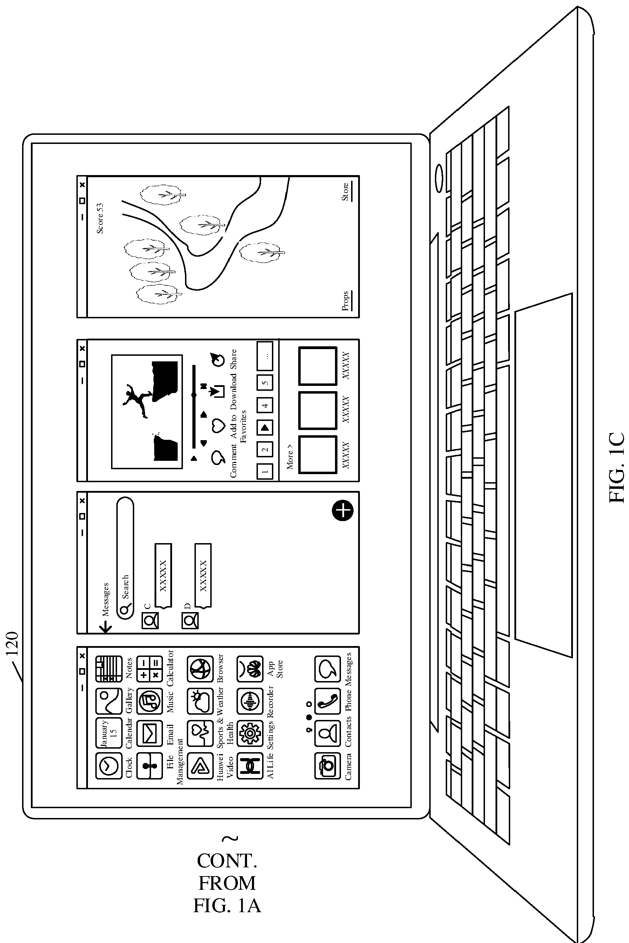

It is assumed that the first device is the mobile phone 110. When the mobile phone 110 displays a home screen of the mobile phone 110, in response to an operation that the user taps an SMS message application icon (for example, a "Messages" icon shown in FIG. 1A), a video application icon (for example, a "Huawei Video" icon shown in FIG. 1A), and a game application icon (for example, a "Game" icon shown in FIG. 1A), the mobile phone 110 renders the home screen of the mobile phone 110, the SMS message application interface, the video application interface, and the game application interface together on the main display and the virtual display. Based on the same-source projection, as shown in FIG. 1C, after the notebook computer 120 (that is, the second device) receives, from the smartphone 110 (that is, the first device), a standard video stream corresponding to all application interfaces that are jointly rendered on the main display and the virtual display of the smartphone 110, the notebook computer 120 displays the home screen of the smartphone 110, the SMS message application interface, the video application interface, and the game application interface based on the standard video stream.

In the different-source projection manner, the first device uses two channels of encoding, and one channel of encoding sends the default interface for display (that is, displays the default interface on a display of the first device). The other channel of encoding sends information such as a standard video stream corresponding to an application interface rendered on the virtual display to the second device.

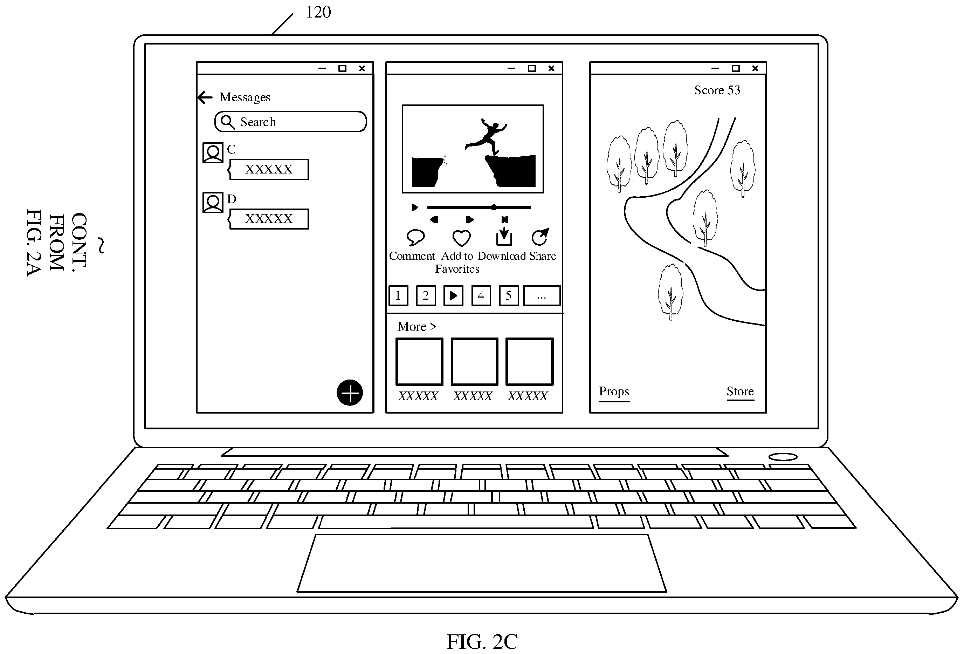

It is assumed that the first device is the mobile phone 110. When the mobile phone 110 displays a home screen of the mobile phone 110, in response to an operation that the user taps an SMS message application icon (for example, a "Messages" icon shown in FIG. 2A), a video application icon (for example, a "Huawei Video" icon shown in FIG. 1A), and a game application icon (for example, a "Game" icon shown in FIG. 2A), the mobile phone 110 renders the home screen of the mobile phone 110, the SMS message application interface, the video application interface, and the game application interface together on the main display and the virtual display. Based on the different-source projection, as shown in FIG. 2C, after the notebook computer 120 (that is, the second device) receives, from the smartphone 110 (that is, the first device), a standard video stream corresponding to the application interfaces (such as the SMS message application interface, the video application interface, and the game application interface) rendered on the virtual display of the smartphone 110, the notebook computer 120 displays the SMS message application interface, the video application interface, and the game application interface based on the standard video stream.

It may be understood that the same-source projection manner and the different-source projection manner have their respective advantages and disadvantages. For example, in the same-source projection manner, continuity of an application can be ensured; in the different-source projection manner, when being switched between different screens, an application needs to be restarted. For example, for the example shown in FIG. 2A to FIG. 2C, if the SMS message application interface, the video application interface, and the game application interface need to be processed on the first device, the corresponding application interface needs to be switched back to the first device. Specifically, switching of a display needs to be completed, and in a process of switching the display, an application is inevitably restarted. However, the different-source projection manner has better isolation. For example, in the different-source projection manner, independent control screens (that is, the display of the first device and the display of the second device) may be provided for the user to process different interfaces.

The multi-window projection method provided in embodiments of this application is applicable to any projection manner (which includes the same-source projection and the different-source projection). The multi-window projection technology can provide convenient user experience. For example, because a size of a display of the notebook computer 120 is usually greater than a size of a display of the smartphone 110, viewing experience of a user can be enhanced and improved. For another example, a mouse of the notebook computer 120 may serve as a finger of the user, to implement a more accurate touch control operation on an SMS message application interface, a video application interface, and a game application interface, or on a home screen of the mobile phone 110. For another example, a large-sized physical keyboard of the notebook computer 120 may replace a small-sized virtual input method window on the display of the smartphone 110, to implement better text input experience. For another example, a multi-channel stereo speaker of the notebook computer 120 may replace a speaker of the smartphone 110, and output audio (for example, audio from a video application interface or a game application interface) from the smartphone 110, to improve volume and sound quality.

In embodiments of this application, a wireless communication connection may be established between the first device and the second device in a manner such as "tap", "scan" (for example, scanning a QR code or a bar code), or "get close for automatic discovery" (for example, by using Bluetooth or wireless fidelity (wireless fidelity, Wi-Fi)). The first device and the second device may transmit information by using a wireless connection transceiver according to a wireless transmission protocol. The wireless transmission protocol may include but is not limited to a Bluetooth (Bluetooth, BT) transmission protocol, a wireless fidelity (wireless fidelity, Wi-Fi) transmission protocol, or the like. For example, the Wi-Fi transmission protocol may be a Wi-Fi P2P transmission protocol. The wireless connection transceiver includes but is not limited to transceivers such as a Bluetooth transceiver and a Wi-Fi transceiver. Information transmission between the first device and the second device is implemented through wireless pairing. The information transmitted between the first device and the second device includes but is not limited to content data (such as a standard video stream) that needs to be displayed, a control instruction, and the like.

Alternatively, a wired communication connection may be established between the first device and the second device. For example, the wired communication connection is established between the first device and the second device by using a video graphics adapter (video graphics array, VGA), a digital visual interface (digital visual interface, DVI), a high-definition multimedia interface (high-definition multimedia interface, HDMI), a data transmission line, or the like. Information transmission between the first device and the second device is implemented by using the established wired communication connection. A specific connection manner between the first device and the second device is not limited in this application.

In embodiments of this application, both the first device and the second device include a display. The first device and the second device may include but are not limited to a smartphone, a netbook, a tablet computer, a smart watch, a smart band, a phone watch, a smart camera, a palmtop computer, a personal computer (personal computer, PC), a personal digital assistant (personal digital assistant, PDA), a portable multimedia player (portable multimedia player, PMP), an (augmented reality, AR)/virtual reality (virtual reality, VR) device, a television, a projection device, a somatic game console in a human-computer interaction scenario, or the like. Alternatively, the first device and the second device may be electronic devices of another type or structure. This is not limited in this application.

Usually, to give full play to a greatest advantage of the multi-window projection technology, the multi-window projection technology is mostly used between a portable device (that is, the first device) and a large-screen device (that is, the second device). For example, the portable device is a smartphone, and the large-screen device is a notebook computer. For another example, the portable device is a tablet computer, and the large-screen device is a television. Certainly, a specific device in a multi-window projection scenario is not limited in this application. As described above, the first device and the second device may be any electronic device that supports multi-window projection, such as a smartphone, a netbook, a tablet computer, a smart watch, a smart band, a phone watch, a smart camera, a palmtop computer, a PDA, a PMP, an AR/VR device, or a television.

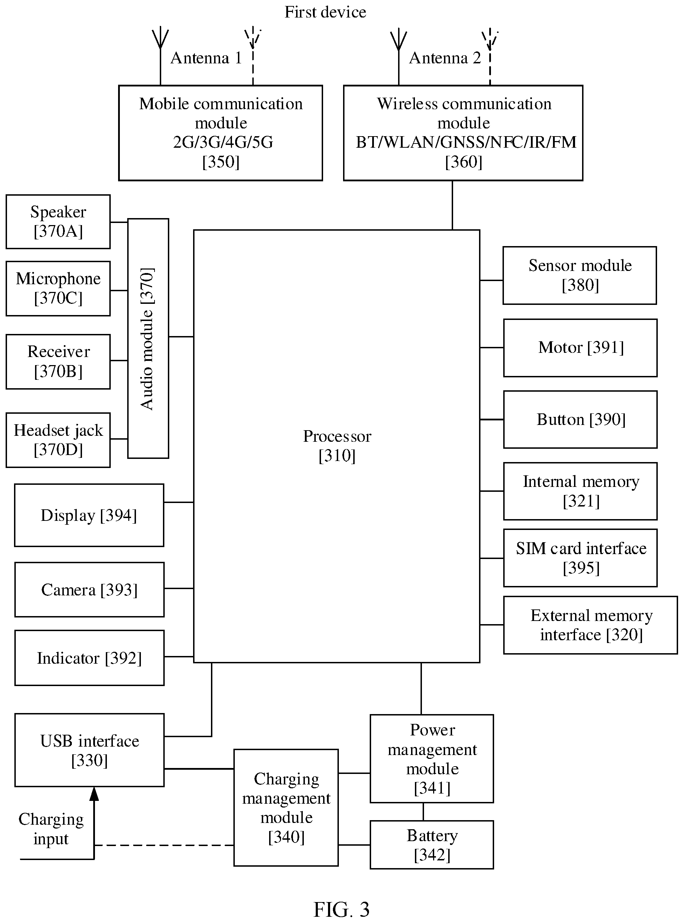

FIG. 3 is a schematic diagram of a hardware structure of a first device according to an embodiment of this application by using a smartphone as an example. As shown in FIG. 3, the first device may include a processor 310, a memory (which includes an external memory interface 320 and an internal memory 321), a universal serial bus (universal serial bus, USB) interface 330, a charging management module 340, a power management module 341, a battery 342, an antenna 1, an antenna 2, a mobile communication module 350, a wireless communication module 360, an audio module 370, a speaker 370A, a receiver 370B, a microphone 370C, a headset jack 370D, a sensor module 380, a button 390, a motor 391, an indicator 392, a camera 393, a display 394, a subscriber identification module (subscriber identification module, SIM) card interface 395, and the like. The sensor module 380 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in this embodiment of the present invention does not constitute a specific limitation on the first device. In some other embodiments of this application, the first device may include more or fewer components than those shown in the figure; or some components may be combined; or some components may be split; or there may be a different component layout. The components shown in the figure may be implemented by using hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a flight controller, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 310, and is configured to store instructions and data. In some embodiments, the memory in the processor 310 is a cache memory. The memory may store instructions or data just used or cyclically used by the processor 310. If the processor 310 needs to use the instructions or the data again, the processor may directly invoke the instructions or the data from the memory. This avoids repeated access and reduces waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 340 is configured to receive a charging input from a charger. The charger may be a wireless charger or a wired charger. In some embodiments of wired charging, the charging management module 340 may receive a charging input from the wired charger through the USB interface 330. In some embodiments of wireless charging, the charging management module 340 may receive a wireless charging input through a wireless charging coil of the first device. The charging management module 340 may further supply power to the first device by using the power management module 341 while charging the battery 342.

The power management module 341 is configured to connect the battery 342 and the charging management module 340 to the processor 310. The power management module 341 receives an input from the battery 342 and/or the charging management module 340, and supplies power to the processor 310, the internal memory 321, the display 394, the camera 393, the wireless communication module 360, and the like. The power management module 341 may be further configured to monitor parameters such as a battery capacity, a battery cycle count, and a battery health status (electric leakage or impedance). In some other embodiments, the power management module 341 may be alternatively disposed in the processor 310. In some other embodiments, the power management module 341 and the charging management module 340 may be alternatively disposed in a same component.

A wireless communication function of the first device may be implemented by using the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the first device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 350 may provide a wireless communication solution that is applied to the first device and that includes 2G/3G/4G/5G, and the like. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering or amplification on the received electromagnetic wave, and transmit the electromagnetic wave to the modem processor for demodulation. The mobile communication module 350 may further amplify a signal modulated by the modem processor, and convert an amplified signal into an electromagnetic wave for radiation through the antenna 1. In some embodiments, at least some function modules in the mobile communication module 350 may be disposed in the processor 310. In some embodiments, at least some function modules in the mobile communication module 350 and at least some modules in the processor 310 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 370A, the receiver 370B, or the like), or displays an image or a video on the display 394. In some embodiments, the modem processor may be an independent component. In some other embodiments, the modem processor may be independent of the processor 310, and is disposed in a same component as the mobile communication module 350 or another function module.

The wireless communication module 360 may provide a wireless communication solution that is applied to the first device and that includes a wireless local area network (wireless local area network, WLAN) (for example, a Wi-Fi network), Bluetooth BT, a global navigation satellite system (global navigation satellite system, GNSS), frequency modulation (frequency modulation, FM), near field communication (near field communication, NFC), an infrared technology (infrared, IR), and the like. The wireless communication module 360 may be one or more components integrating at least one communication processing module. The wireless communication module 360 receives an electromagnetic wave through the antenna 2, performs frequency modulation and filtering processing on an electromagnetic wave signal, and sends a processed signal to the processor 310. The wireless communication module 360 may further receive a to-be-sent signal from the processor 310, perform frequency modulation and amplification on the signal, and convert a processed signal into an electromagnetic wave for radiation through the antenna 2.

In some embodiments, in the first device, the antenna 1 is coupled to the mobile communication module 350, and the antenna 2 is coupled to the wireless communication module 360, so that the first device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), and/or a satellite based augmentation system (satellite based augmentation system, SBAS).

The first device implements a display function by using the GPU, the display 394, the application processor, and the like. The GPU is a microprocessor for image processing, and is connected to the display 394 and the application processor. The GPU is configured to: perform mathematical and geometric calculation, and render an image. The processor 310 may include one or more GPUs that execute program instructions to generate or change display information. In this embodiment of this application, the GPU may be configured to convert and drive display information required by a computer system, and provide a row scan signal for a display, to control correct display of the display.

The display 394 is configured to display an image, a video, and the like. The display 394 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the first device may include one or N displays 394, where N is a positive integer greater than 1.

The first device may implement a photographing function by using the ISP, the camera 393, the video codec, the GPU, the display 394, the application processor, and the like.

The external memory interface 320 may be configured to connect to an external memory card, for example, a micro SD card, to extend a storage capability of the first device. The external memory card communicates with the processor 310 through the external memory interface 320, to implement a data storage function. For example, files such as music and a video are stored in the external memory card.

The internal memory 321 may be configured to store computer-executable program code. The executable program code includes instructions. The internal memory 321 may include a program storage area and a data storage area. The program storage area may store an operating system, an application required by at least one function (for example, a sound playing function or an image playing function), and the like. The data storage area may store data (such as audio data and a phone book) created during use of the first device, and the like. In addition, the internal memory 321 may include a high-speed random access memory, and may further include a nonvolatile memory, for example, at least one magnetic disk storage device, a flash storage device, or a universal flash storage (universal flash storage, UFS). The processor 310 runs the instructions stored in the internal memory 321 and/or the instructions stored in the memory disposed in the processor, to perform various function applications and data processing of the first device.

The first device may implement an audio function by using the audio module 370, the speaker 370A, the receiver 370B, the microphone 370C, the application processor, and the like, for example, music playing and recording. For specific working principles and functions of the audio module 370, the speaker 370A, the receiver 370B, and the microphone 370C, refer to descriptions in a conventional technology.

The button 390 includes a power button, a volume button, and the like. The button 390 may be a mechanical button, or a touch button. The first device may receive a button input, and generate a button signal input related to a user setting and function control of the first device.

The motor 391 may generate a vibration prompt. The motor 391 may be configured to produce an incoming call vibration prompt and a touch vibration feedback. For example, touch operations performed on different applications (for example, a photographing application and an audio playing application) may correspond to different vibration feedback effects. The motor 391 may also correspond to different vibration feedback effects for touch operations performed on different regions of the display 394. Different application scenarios (for example, a time reminder, information receiving, an alarm clock, and a game) may also correspond to different vibration feedback effects. A touch vibration feedback effect may be further customized.

The indicator 392 may be an indicator light, and may be configured to indicate a charging status and a power change, or may be configured to indicate a message, a missed call, a notification, and the like.

The SIM card interface 395 is configured to connect to a SIM card. The SIM card may be inserted into the SIM card interface 395 or plugged from the SIM card interface 395, to implement contact with or separation from the first device. The first device may support one or N SIM card interfaces, where N is a positive integer greater than 1. The SIM card interface 395 may support a nano-SIM card, a micro-SIM card, a SIM card, and the like. A plurality of cards may be inserted into a same SIM card interface 395 at the same time. The plurality of cards may be of a same type or of different types. The SIM card interface 395 may be compatible with different types of SIM cards. The SIM card interface 395 may be further compatible with an external memory card. The first device interacts with a network by using the SIM card, to implement functions such as calling and data communication. In some embodiments, the first device uses an eSIM, namely, an embedded SIM card. The eSIM card may be embedded into the first device, and cannot be separated from the first device.

It should be noted that hardware modules included in the first device shown in FIG. 3 are merely described as examples, and do not limit a specific structure of the first device. For example, the first device may further include another function module.

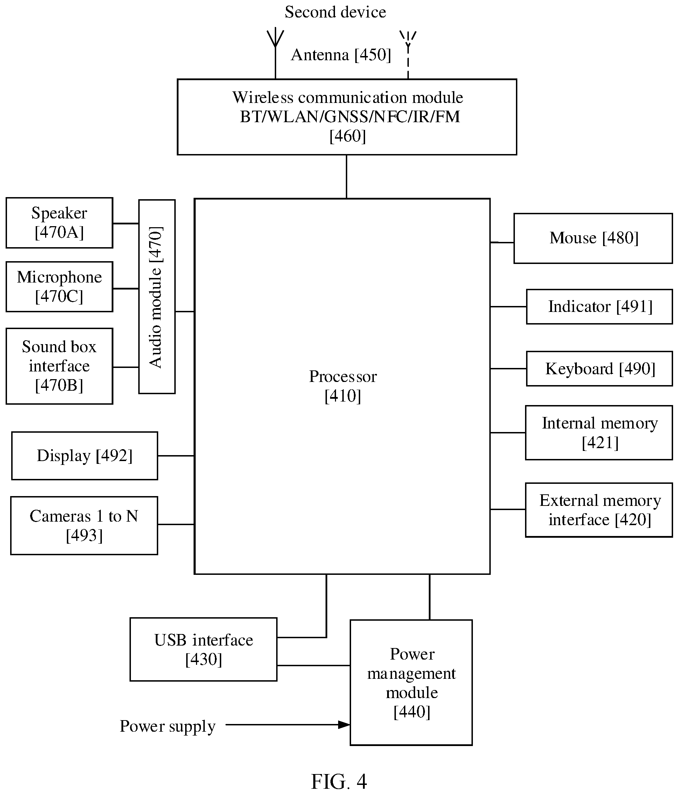

In an example, FIG. 4 is a schematic diagram of a hardware structure of a second device by using an example in which the second device is a notebook computer. As shown in FIG. 3, the notebook computer may include a processor 410, an external memory interface 420, an internal memory 421, a USB interface 430, a power management module 440, an antenna 450, a wireless communication module 460, an audio module 470, a speaker 470A, a microphone 470C, a sound box interface 470B, a mouse 480, a keyboard 490, an indicator 491, a camera 493, a display 492, and the like.

It may be understood that the structure shown in this embodiment does not constitute a specific limitation on the notebook computer. In some other embodiments, the notebook computer may include more or fewer components than those shown in the figure, or some components may be combined, or some components may be split, or there may be a different component layout. The components shown in the figure may be implemented by using hardware, software, or a combination of software and hardware.

The processor 410 may include one or more processing units. For example, the processor 410 may include an application processor AP, a modem processor, a graphics processing unit GPU, an ISP, a controller, a memory, a video codec, a DSP, a baseband processor, an NPU, and/or the like. Different processing units may be independent components, or may be integrated into one or more processors.

The controller can be a nerve center and command center of the notebook computer. The controller may complete instruction reading based on instructions, generate an operation control signal, and further execute instruction control.

A memory may be further disposed in the processor 410, and is configured to store instructions and data. In some embodiments, the memory in the processor 410 is a cache memory. The memory may store instructions or data just used or cyclically used by the processor 410. If the processor 410 needs to use the instructions or the data again, the processor 410 may directly invoke the instructions or the data from the memory. This avoids repeated access and reduces waiting time of the processor 410, thereby improving system efficiency. In some embodiments, the processor 410 may include one or more interfaces. The interface may include an inter-integrated circuit I2C interface, an inter-integrated circuit sound I2S interface, a PCM interface, a UART interface, an MIPI, a GPIO interface, a USB interface, and/or the like.

It may be understood that an interface connection relationship between the modules shown in this embodiment is merely an example for description, and does not constitute a limitation on a structure of the notebook computer. In some other embodiments, the notebook computer may alternatively use an interface connection manner different from that in the foregoing embodiment, or a combination of a plurality of interface connection manners.

The power management module 440 is configured to connect to a power supply. The power management module 440 may be further connected to the processor 410, the internal memory 421, the display 494, the camera 493, the wireless communication module 460, and the like. The power management module 441 receives an input from the power supply, and supplies power to the processor 410, the internal memory 421, the display 494, the camera 493, the wireless communication module 460, and the like. In some embodiments, the power management module 441 may be alternatively disposed in the processor 410.

A wireless communication function of the notebook computer may be implemented by using the antenna, the wireless communication module 460, and the like. The wireless communication module 460 may provide a wireless communication solution that is applied to the notebook computer and that includes a wireless local area network WLAN (for example, a Wi-Fi network), Bluetooth BT, a global navigation satellite system GNSS, frequency modulation FM, near field communication NFC, an infrared technology IR, and the like.

The wireless communication module 460 may be one or more components integrating at least one communication processing module. The wireless communication module 460 receives an electromagnetic wave through the antenna 2, performs frequency modulation and filtering processing on an electromagnetic wave signal, and sends a processed signal to the processor 410. The wireless communication module 460 may further receive a to-be-sent signal from the processor 410, perform frequency modulation and amplification on the signal, and convert a processed signal into an electromagnetic wave for radiation through the antenna 2. In some embodiments, the antenna of the notebook computer is coupled to the wireless communication module 360, so that the notebook computer can communicate with a network and another device by using a wireless communication technology.

The notebook computer implements a display function by using the GPU, the display 492, the application processor, and the like. The GPU is a microprocessor for image processing, and is connected to the display 492 and the application processor. The GPU is configured to: perform mathematical and geometric calculation, and render an image. The processor 410 may include one or more GPUs that execute program instructions to generate or change display information. The display 492 is configured to display an image, a video, and the like. The display 492 includes a display panel. In this embodiment of this application, the GPU may be configured to convert and drive display information required by a computer system, and provide a row scan signal for a display, to control correct display of the display.

The notebook computer may implement a photographing function by using the ISP, the camera 493, the video codec, the GPU, the display 492, the application processor, and the like. The ISP is configured to process data fed back by the camera 493. In some embodiments, the ISP may be disposed in the camera 493.

The digital signal processor is configured to process a digital signal, and may process another digital signal in addition to a digital image signal. For example, when the notebook computer selects a frequency, the digital signal processor is configured to perform Fourier transform on frequency energy. The video codec is configured to compress or decompress a digital video. The notebook computer may support one or more video codecs. In this way, the notebook computer may play videos in a plurality of encoding formats, for example, moving picture experts group (moving picture experts group, MPEG)-1, MPEG-2, MPEG-3 and MPEG-4.

The external memory interface 420 may be configured to connect to an external memory card, for example, a micro SD card, to extend a storage capability of the notebook computer. The external memory card communicates with the processor 410 through the external memory interface 420, to implement a data storage function. For example, files such as music and a video are stored in the external memory card.

The internal memory 421 may be configured to store computer-executable program code. The executable program code includes instructions. The processor 410 runs the instructions stored in the internal memory 421, to perform various function applications and data processing of the notebook computer. For example, in this embodiment of this application, the processor 410 may execute the instructions stored in the internal memory 421, and the internal memory 421 may include a program storage area and a data storage area.

The program storage area may store an operating system, an application required by at least one function (for example, a sound playing function or an image playing function), and the like. The data storage area may store data (such as audio data and a phone book) created during use of the notebook computer, and the like. In addition, the internal memory 421 may include a high-speed random access memory, and may further include a nonvolatile memory, for example, at least one magnetic disk storage device, a flash storage device, or a universal flash storage (universal flash storage, UFS).

The notebook computer may implement an audio function by using the audio module 470, the speaker 470A, the microphone 470C, the sound box interface 470B, the application processor, and the like, for example, music playing and recording.

The indicator 491 may be an indicator light, and may be configured to indicate that the notebook computer is in a power-on state, a power-off state, or the like. For example, if the indicator light is off, it may indicate that the notebook computer is in the power-off state; or if the indicator light is on, it may indicate that the notebook computer is in the power-on state.

It may be understood that the structure shown in this embodiment of this application does not constitute a specific limitation on the notebook computer. The notebook computer may have more or fewer components than those shown in FIG. 4, may combine two or more components, or may have different component configurations. For example, the notebook computer may further include components such as a sound box. Various components shown in FIG. 4 may be implemented in hardware including one or more signal processing circuits or application-specific integrated circuits, in software, or in a combination of hardware and software.

For example, software systems of the first device and the second device provided in embodiments of this application may use a layered architecture, an event-driven architecture, a microkernel architecture, a microservice architecture, or a cloud architecture. For example, the software system may include but is not limited to operating systems such as Symbian (Symbian), Android (Android), Windows, iOS (iOS), Blackberry (Blackberry), and Harmony (Harmony). This is not limited in this application.

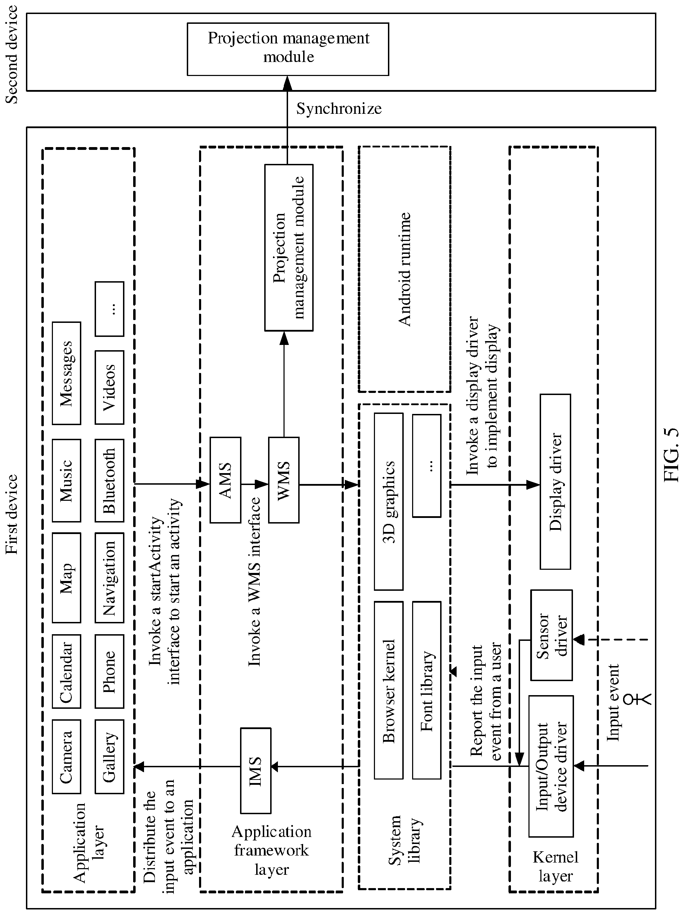

FIG. 5 is specifically a schematic diagram of software interaction existing when a first device performs projection onto a second device according to an embodiment of this application by using an Android (Android) operating system with a layered architecture as an example. In the layered architecture, software may be divided into several layers, and each layer has a clear role and task. The layers communicate with each other through a software interface. As shown in FIG. 5, software structures of the first device and the second device may be divided into three layers from top to bottom: an application program layer (application layer for short), an application framework layer (framework layer for short), a system library, Android runtime, and a kernel layer (also referred to as a driver layer).

The application layer may include a series of application packages, for example, application programs such as Camera, Gallery, Calendar, Phone, Map, Navigation, Bluetooth, Music, Videos, and Messages. For ease of description, an application program is referred to as an application for short below. An application on the first device may be a native application (for example, an application installed on the first device when an operating system is installed on the first device before the first device is delivered from a factory), or may be a third-party application (for example, an application downloaded and installed by a user from an application store). This is not limited in this embodiment of this application.

The application framework layer provides an application programming interface (application programming interface, API) and a programming framework for an application at the application layer. As shown in FIG. 5, the application framework layer may include a window manager service (window manager service, WMS), an activity manager service (activity manager service, AMS), an input manager service (input manager service, IMS), and a projection management module. In some embodiments, the application framework layer may further include a content provider, a view system, a phone manager, a resource manager, a notification manager, and the like (not shown in FIG. 5).

The WMS carries data and attributes related to an "interface", and is used to manage a status related to the "interface", for example, window program management and event dispatch. The window program management refers to sequentially outputting, based on a display request of an application, the application to a physical screen or another display device with assistance of an application server and the WMS. The event dispatch refers to dispatching a user event from a keyboard, a physical button, a touchscreen, a mouse, and a trackball (TraceBoll) to a corresponding control or window. The window manager service may further obtain a size of a display, determine whether there is a status bar, lock a screen, take a screenshot, and the like.

The AMS is used to manage an activity, start, switch, and schedule components in a system, and manage and schedule applications. Specifically, data classes used to store a process (process), an activity (activity), and a task (task) are defined in the AMS. The data class corresponding to the process (process) may include process file information, memory status information of the process, and an activity, a service, and the like that are included in the process. Activity information may be saved in an ActivityStack. The ActivityStack is used to schedule application activities together. The ActivityStack may specifically save information about all running activities (that is, final ArrayList mHistory), for example, interface configuration information. For example, a running activity may be stored in a new ArrayList. The ActivityStack may also store information about a historical run activity, such as interface configuration information. It should be noted that an activity does not correspond to an application. Only an ActivityThread corresponds to an application. Therefore, Android allows a plurality of applications to run at the same time, which actually allows a plurality of ActivityThreads to run at the same time.

In Android, a basic idea of activity scheduling is as follows: Each application process reports to the AMS when starting a new activity or stopping a current activity. The AMS records all application processes internally. When receiving a start or stop report, the AMS updates an internal record and then notifies a corresponding client process to run or to stop a specified activity. The AMS has records of all activities internally. Therefore, the AMS can schedule these activities and automatically close a background activity based on a status of the activity and a system memory.

The IMS may be used to perform processing such as translation and encapsulation on an original input event, to obtain an input event including more information, and send the input event to the WMS. The WMS stores a clickable region (for example, a control) of each application, location information of a focus window, and the like. Therefore, the WMS can correctly distribute the input event to a specified control or focus window.

The content provider is used to store and obtain data, and enable the data to be accessed by an application. The data may include a video, an image, audio, calls that are made and answered, browsing history and bookmarks, a phone book, and the like.

The view system includes visual controls, such as a control for displaying a text and a control for displaying an image. The view system may be used to construct an application. A display interface may include one or more views. For example, a display interface including an SMS message notification icon may include a text display view and an image display view.

The phone manager is used to provide a communication function of the first device, for example, management of a call status (including answering, declining, or the like).

The resource manager provides, for an application, various resources such as a localized character string, an icon, an image, a layout file, and a video file.

The notification manager enables an application to display notification information in a status bar, and may be used to convey a notification-type message. The message may automatically disappear after a short pause without user interaction. For example, the notification manager is used to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The projection management module is configured to manage a projection-related transaction, for example, transmit a video stream and an interface configuration parameter that correspond to an application interface, and for another example, receive and distribute a screen switching request from a projection device (for example, the second device). For example, the projection management module may be Huawei assistant, manager, or the like. For example, the assistant may be a module configured to exchange projection-related information with another electronic device (for example, the second device). For example, the assistant may provide an API and a programming framework for communication between the first device and the another electronic device (for example, the second device). For example, the manager may be a computer manager, a computer assistant, or the like.

The system library and the Android runtime include a function that needs to be invoked by FWK, an Android core library, and an Android virtual machine. The system library may include a plurality of function modules, for example, a browser kernel, 3-dimensional (3-dimensional, 3D) graphics, and a font library.

The system library may include a plurality of function modules, for example, a surface manager (surface manager), a media library (media library), a three-dimensional graphics processing library (for example, OpenGL ES), and a 2D graphics engine (for example, SGL).

The surface manager is used to manage a display subsystem and provide fusion of a 2D layer and a 3D layer for a plurality of applications.

The media library supports playback and recording in a plurality of frequently used audio and video formats, a static image file, and the like. The media library may support a plurality of audio and video encoding formats such as MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer may include a display driver, an input/output device driver (for example, a keyboard, a touchscreen, a headset, a speaker, and a microphone), a device node, a camera driver, an audio driver, a sensor driver, and the like. A user performs an input operation by using an input device, and the kernel layer may generate a corresponding original input event based on the input operation, and store the original input event in the device node. The input/output device driver can detect an input event from the user, for example, an operation of starting an application by a user.

In this embodiment of this application, when the first device performs projection onto the second device, a user may control, by using the second device, an application interface projected by the first device to the second device. An input/output device driver or a sensor driver of the second device may detect an input event from the user. For example, the input event may be an input event in which a user taps a button in an interface to enter a next-level interface of the interface, or an input event in which a user rotates a display of the second device. The input/output device driver or the sensor driver of the second device reports the input event from the user to the IMS. The IMS synchronizes the input event to a projection management module (such as an assistant or a manager) of the first device by using a projection management module (such as an assistant or a manager). The projection management module of the first device distributes the input event to a corresponding application. The application invokes a startActivity interface in the AMS to start an activity corresponding to the input event. The AMS invokes a WMS interface based on a start parameter. The WMS draws a window corresponding to the activity based on the start parameter and refreshes an application interface configuration parameter. Then, the projection management module of the first device encodes a surface corresponding to the refreshed application interface configuration parameter into a standard video stream, and resynchronizes the standard video stream to a projection management module of the second device. The projection management module of the second device re-invokes, based on the received standard video stream, a display driver by using the WMS, to implement synchronous display on the display of the second device.

It should be noted that FIG. 5 describes a schematic diagram of software interaction between devices during multi-window projection by only using the Android system with the layered architecture as an example. Specific architectures of software systems of the first device and the second device are not limited in this application. For specific descriptions of software systems of other architectures, refer to a conventional technology.

For ease of understanding, the following explains and describes some technical terms in embodiments of this application.

A frame rate (frames per second, FPS) indicates a quantity of frames of an image in one second. It can also be considered as a quantity of times that a graphics processing unit can refresh per second. The frame rate usually affects smoothness of a picture. The frame rate is in direct proportion to the smoothness of the picture. Specifically, a higher frame rate indicates a smoother picture, and a lower frame rate indicates a more jittery picture. Due to a special physiological structure of human eyes, usually, if the frame rate of the picture is higher than 16 FPS, humans consider that the picture is coherent. This phenomenon is referred to as persistence of vision.

Resolution indicates a quantity of pixels that can be displayed per unit area. The resolution is used to reflect display precision. Usually, a larger quantity of pixels that can be displayed per unit area indicates a finer picture, and a smaller quantity of pixels that can be displayed per unit area indicates a rougher picture.

In embodiments of this application, display resolution and image resolution may be specifically involved.

Display resolution indicates a quantity of pixels that can be displayed per unit area on a display of a device. The display resolution is used to reflect precision of the screen. Points, lines, and surfaces on the display of the device are composed of pixels. Therefore, a larger quantity of pixels that can be displayed on the display indicates a finer picture. In addition, a larger quantity of pixels that can be displayed on the display indicates more information that can be displayed in a display region of a same size. Usually, when the display resolution is constant, a smaller display indicates a clearer image. When a size of a display is constant, higher display resolution indicates a clearer image.

Image resolution indicates a quantity of pixels that can be displayed in an image per unit area. For example, the image resolution may be represented by pixels per inch (pixels per inch, ppi) and an image size (which includes a length and width of an image). The image resolution is used to reflect precision of an image (that is, a picture). For another example, the image resolution may be represented by a quantity of horizontal pixels and a quantity of vertical pixels. Usually, when the display resolution is constant, higher image resolution indicates a larger quantity of pixels of an image and a larger size and area of an image.

A bitrate (bitrate, br) indicates a quantity of bits of data transmitted per unit time, for example, a quantity of bits (bits) transmitted per unit time. Therefore, the bitrate is also referred to as a bit rate. Usually, a unit of the bitrate is bps (bit per second). The bitrate may be understood as a sampling rate. Usually, a higher sampling rate indicates higher precision, and a processed file is closer to an original file. However, because a file size is proportional to the sampling rate, almost all encoding formats focus on how to achieve minimum distortion with the lowest bitrate. Encoding formats such as a variable bitrate (variable bitrate, VBR), an average bitrate (average bitrate, ABR), and a constant bitrate (constant bitrate, CBR) are derived around this core.

Generally, when the bitrate is constant, resolution is inversely proportional to definition. Specifically, higher resolution indicates a less clear image, and lower resolution indicates a clearer image. When the resolution is constant, the bitrate is in direct proportion to the definition. Specifically, a higher bitrate indicates a clearer image, and a lower bitrate indicates a less clear image.

Usually, a process in which the first device performs projection onto the second device may mainly include rendering instruction generation → interface rendering → color space conversion → video encoding → video decoding → color space conversion → picture cutting → sending for display. The interface rendering and the video encoding are completed by the first device, and the video decoding, the picture cutting, and the sending for display are completed by the second device. The interface rendering means that the first device jointly renders a plurality of application interfaces displayed in a plurality of windows.

The color space conversion refers to representation of a color in a color encoding form that can be recognized by a machine. For example, an encoding scheme such as YUV color encoding or RGB color encoding may be used for color encoding. In the YUV color encoding, luminance and chrominance are used to define a color of a pixel. In the YUV, Y indicates luminance (luminance), and U and V indicate chrominance (chrominance). Chrominance is used to define two aspects of a color: hue and saturation. The RGB color encoding is performed by using a principle that color light of three primary colors: red (red), green (green), and blue (blue) is added at different ratios to generate various color light. In an RGB image, each pixel has three base colors: red, green, and blue. Each primary color occupies 8 bits (that is, one byte). Therefore, one pixel occupies 24 bits (that is, three bytes). For descriptions of a specific encoding scheme and a specific process of color encoding, refer to explanations and descriptions in a conventional technology. Details are not described in this application.

Usually, an encoding and decoding capability of a codec determines whether the color space conversion is required. For example, if a device supports RGB color decoding but does not support YUV color decoding, a color encoding form needs to be converted from YUV to RGB.

Therefore, in some embodiments, if a codec of a device has a corresponding encoding and decoding capability, the foregoing color space conversion step may not be performed. The following embodiments of this application are described by using an example in which a device needs to perform the color space conversion.

The video encoding refers to a manner of converting a file in a video format into a file in another video format by using a specific compression technology. For example, standards such as H.261, H.263, H.263+, H.263++, or H.264 may be used for the video encoding. The video decoding is a reverse process of the video encoding. For descriptions of different video encoding standards, a specific video encoding process, and a specific video decoding process, refer to explanations and descriptions in a conventional technology. Details are not described in this application.

Usually, a decoded video stream includes image frames. The image frames include interface configuration information of a plurality of projection interfaces, for example, an application development attribute/application data configuration, boundary information of an application interface, turning of an application, an icon in an application interface, a text in an application interface, a location, size, and color of an icon, and a display location, size, and color of a text. The application development attribute and the application data configuration may be used to reflect one or more of an interface attribute, an application category, an application function, or the like. The picture cutting refers to cutting an image frame including configuration information of a projection interface into a plurality of sub-interfaces, for example, cutting the image frame into a plurality of application interfaces. The sending for display refers to invoking a display driver to start a plurality of rendering tasks, and rendering a plurality of application interfaces obtained after cutting in corresponding windows and displaying the plurality of application interfaces on a display.

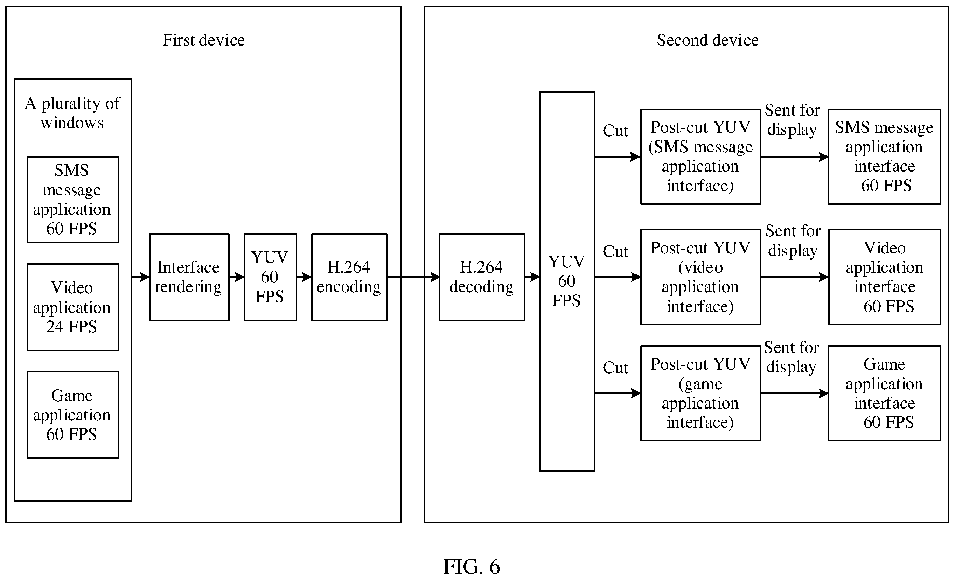

FIG. 6 is a schematic diagram of a conventional process in which a first device performs projection onto a second device by using an example in which the first device projects an SMS message application, a video application, and a game application to the second device. As shown in FIG. 6, when the first device performs projection onto the second device, the first device first performs interface rendering on an SMS message application interface, a video application interface, and a game application interface that are started on the first device together. Then, color space conversion is performed on a rendered interface (FIG. 6 uses conversion-to-YUV color encoding as an example). Then, video encoding is performed on an interface obtained after the color space conversion (FIG. 6 uses an example in which the H.264 standard is used for the video encoding). Finally, an encoded standard video stream is sent (for example, sent by using a projection management module of the first device) to the second device (for example, a projection management module of the second device). After receiving the standard video stream, the second device first performs video decoding on the standard video stream (FIG. 6 uses an example in which the H.264 standard is used for the video decoding). Then, color space conversion is performed on each frame of a decoded picture (FIG. 6 uses conversion-to-YUV color decoding as an example). Then, each frame of a picture is cut based on attributes of different interfaces, for example, cut into an SMS message application interface, a video application interface, and a game application interface. Finally, the cut application interfaces are sent for display.

However, during multi-window projection shown in FIG. 6, because both frame rates of the SMS message application and the game application are 60 FPS, during encoding, to ensure completion of information of an application interface required for a high frame rate, the first device usually encodes all application interfaces at a frame rate of 60 FPS. Correspondingly, a plurality of application interfaces obtained by the second device through decoding and cutting are also sent for display at a constant frame rate (for example, 60 FPS). When a plurality of application interfaces with high frame rates are simultaneously decoded and rendered on the second device, usage of a GPU is often high (for example, reaches 80% or more). In addition, in a conventional multi-window projection technology, resolution of a plurality of application interfaces is usually constant. When a plurality of application interfaces with high resolution are simultaneously decoded and rendered on the second device, throughput pressure of a communication resource (for example, a Wi-Fi resource) is usually high. The preceding problems may cause system stuttering, resulting in freezing or unsmoothness of a projected picture and affecting user experience.

To resolve the foregoing problems, an embodiment of this application provides a multi-window projection method. The method is used to ensure smoothness and definition of a projected picture when a first device performs multi-window projection onto a second device.

For example, according to the multi-window projection method provided in this embodiment of this application, when the first device performs multi-window projection onto the second device, the smoothness and the definition of the projected picture can be ensured by reducing pressure of a GPU of the second device.

In some embodiments, the second device may adaptively and dynamically adjust, based on window statuses corresponding to a plurality of application interfaces projected by the first device to the second device, frame rates corresponding to the plurality of application interfaces, to reduce the pressure of the GPU of the second device, so as to ensure the smoothness and the definition of the projected picture. The window statuses may include but are not limited to a focus window, a non-minimized and non-focus window, and a minimized window.

In some other embodiments, the second device may adaptively and dynamically adjust, based on application categories corresponding to a plurality of application interfaces projected by the first device to the second device, frame rates corresponding to different application interfaces, to reduce the pressure of the GPU of the second device, so as to ensure the smoothness and the definition of the projected picture. The application categories may include but are not limited to an instant messaging category, a video category, a game category, an office category, a social category, a life category, a shopping category, a function category, or the like.

For another example, according to the multi-window projection method provided in this embodiment of this application, when the first device performs multi-window projection onto the second device, the smoothness and the definition of the projected picture can be ensured by adaptively adjusting a size and/or resolution of a display region. The resolution may include but is not limited to display resolution and video resolution.

In some embodiments, the second device may adaptively and dynamically adjust one or more of an application display region (display) size, application display region (display) resolution (also referred to as display resolution), video resolution, and the like based on a quantity of application interfaces projected by the first device to the second device, to ensure the smoothness and the definition of the projected picture. A video includes frames of images. Therefore, the video resolution is also referred to as image resolution.

In this embodiment of this application, a display region (display) size may be understood as a size of a display region that is of a display of a device and that is used to display an application interface. Display region (display) resolution is used to represent a quantity of pixels that can be displayed per unit area in a display region that is of a display of a device and that is used to display an application interface. Video resolution is used to represent a quantity of pixels that can be displayed in a unit image area of an image frame corresponding to a video stream.

A multi-window projection method provided in the following embodiments of this application is applicable to both a same-source projection manner and a different-source projection manner. With reference to specific embodiments, the following specifically describes the technical solutions provided in embodiments of this application by using an example in which a first device and a second device comply with a wireless transmission protocol.

### Embodiment 1

In Embodiment 1 of this application, the second device may adaptively and dynamically adjust, based on window statuses corresponding to a plurality of application interfaces projected by the first device to the second device, frame rates corresponding to different application interfaces, to reduce pressure of a GPU of the second device, so as to ensure smoothness and definition of a projected picture.

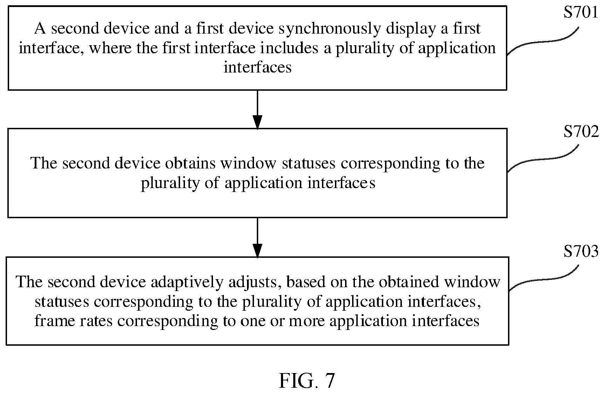

FIG. 7 is a flowchart of a multi-window projection method according to an embodiment of this application. As shown in FIG. 7, the multi-window projection method provided in this embodiment of this application may include the following steps S701 to S703.

S701: The second device and the first device synchronously display a first interface, where the first interface includes a plurality of application interfaces.

In this embodiment of this application, that the second device and the first device synchronously display a first interface means that the second device synchronously displays the first interface projected by the first device to the second device. The first interface is a combination of the plurality of application interfaces.

For example, it is assumed that the first device is a mobile phone 110, and the mobile phone 110 projects a home screen of the mobile phone 110, an SMS message application interface, a video application interface, and a game application interface to a notebook computer 120 in a same-source projection manner. In this case, the first interface is shown in FIG. 1C, and includes the mobile phone home screen, the SMS message application interface, the video application interface, and the game application interface.

For another example, the first device is a mobile phone 110, and the mobile phone 110 projects an SMS message application interface, a video application interface, and a game application interface to a notebook computer 120 in a different-source projection manner. In this case, the first interface is shown in FIG. 2C, and includes the SMS message application interface, the video application interface, and the game application interface.

S702: The second device obtains window statuses corresponding to the plurality of application interfaces.

The window statuses may include but are not limited to a focus window, a non-minimized and non-focus window, and a minimized window.

In this embodiment of this application, the focus window may be understood as an application window most recently operated by a user. The focus window may also be referred to as a current active window. The non-minimized and non-focus window may be understood as an application window that is not currently minimized and that is not operated by the user last time. The minimized window may be understood as an application window that is currently minimized.

The first interface shown in FIG. 1C is used as an example. The home screen of the mobile phone 110, the SMS message application interface, the video application interface, and the game application interface are all non-minimized windows. It is assumed that an application window operated by a user most recently is a video application interface. In this case, the video application interface is a focus window, and the home screen of the mobile phone 110, the SMS message application interface, and the video application interface are non-minimized and non-focus windows.

The first interface shown in FIG. 2C is used as an example. The SMS message application interface, the video application interface, and the game application interface are all non-minimized windows. It is assumed that an application window operated by a user most recently is a video application interface. In this case, the video application interface is a focus window, and the SMS message application interface and the video application interface are non-minimized and non-focus windows.

In some embodiments, the second device may periodically obtain the window statuses corresponding to the plurality of application interfaces. For example, the second device may periodically obtain, based on a preset period, the window statuses corresponding to the plurality of application interfaces. The preset period may be preset in the second device. For example, the preset period may be 3 seconds (seconds, s).

In some other embodiments, the second device may obtain, in response to a received operation control event from a user, the window statuses corresponding to the plurality of application interfaces. For example, the second device may obtain, in response to an operation control event received by an input/output device driver or a sensor driver from a user, the window statuses corresponding to the plurality of application interfaces. For example, the operation control event may be an operation control event performed by the user on any one of the plurality of application interfaces.

S703: The second device adaptively adjusts, based on the obtained window statuses corresponding to the plurality of application interfaces, frame rates corresponding to the plurality of application interfaces.

The second device may adaptively adjust, based on a preset policy (for example, a first preset policy), the frame rates corresponding to the plurality of application interfaces. The first preset policy is related to the window statuses.

It may be understood that degrees of experience requirements of a user for application interfaces in different window statuses are different for transmission and display. For example, the degrees of the experience requirements of the user in descending order are as follows: a focus window > a non-minimized and non-focus window > a minimized window. Therefore, in some embodiments, the frame rates corresponding to the plurality of application interfaces are adaptively adjusted based on the window statuses corresponding to the plurality of application interfaces, so that a GPU resource and/or a processing capability may be tilted to an application interface (for example, an application interface in a focus window) with a higher user experience requirement, and the GPU resource and/or the processing capability allocated by a device to an application interface (for example, an application interface in a minimized window) with a lower user experience requirement may be reduced.

Based on the foregoing reason, in some embodiments, the second device may adaptively adjust, based on the following first preset policy, the frame rates corresponding to the plurality of application interfaces: adaptively adjusting, in descending order based on the user experience requirement degrees, the frame rates corresponding to the plurality of application interfaces.

For example, if the user experience requirement degrees in descending order are as follows: a focus window > a non-minimized and non-focus window > a minimized window, sizes of the frame rates may be adjusted to: a focus window > a non-minimized and non-focus window > a minimized window. For example, a frame rate of an application interface corresponding to a focus window may be adjusted to 60 FPS (that is, refresh of 60 times per second is performed); a frame rate of an application interface corresponding to a non-minimized and non-focus window may be adjusted to 30 FPS (that is, refresh of 30 times per second is performed); and a frame rate of an application interface corresponding to a minimized window may be adjusted to 0 FPS (that is, no refresh is performed). The focus window is an application window most recently operated by a user. Therefore, the degree of experience requirement of the user is highest. The minimized window is currently minimized. Therefore, the degree of experience requirement of the user is lowest. A current user experience requirement degree of the non-minimized and non-focus window is not high, but a user may operate an application interface in the window at any time. Therefore, the degree of experience requirement of the user is between that of the focus window and that of the minimized window.

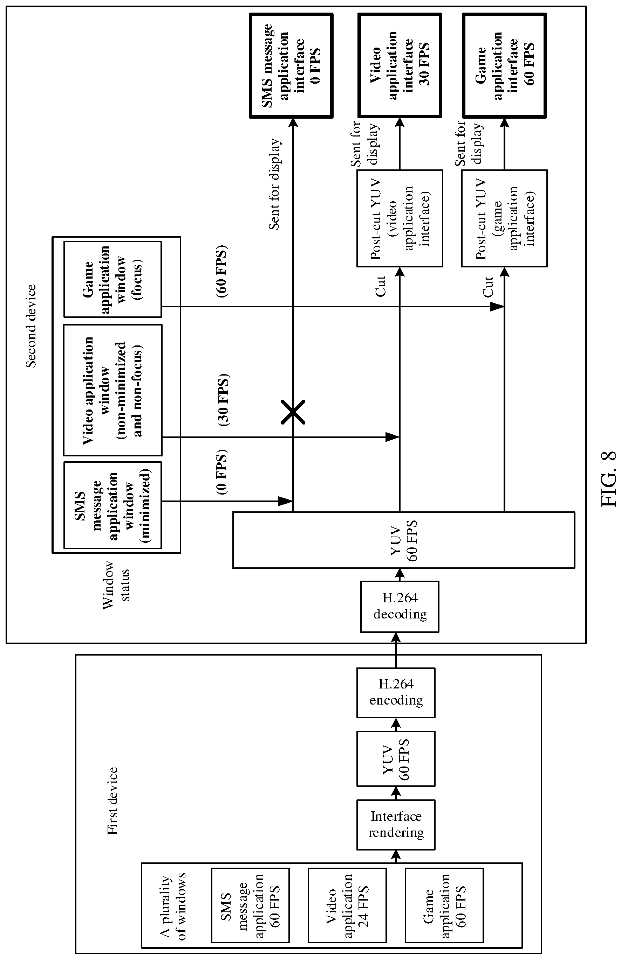

FIG. 8 is a schematic diagram of a multi-window collaborative projection process according to an embodiment of this application by using an example in which the first device projects an SMS message application, a video application, and a game application to the second device. As shown in FIG. 8, during initial projection, the first device performs interface rendering on an SMS message application, a video application, and a game application started on the first device together, performs color space conversion (FIG. 8 uses conversion-to-YUV color encoding as an example), and performs video encoding (FIG. 8 uses an example in which the H.264 standard is used for video encoding), and sends an encoded standard video stream to the second device. The second device completes video decoding (FIG. 8 uses an example in which the H.264 standard is used for video decoding), color space conversion (FIG. 8 uses conversion-to-YUV color decoding as an example), picture cutting, and sending for display.

It is assumed that currently, the second device separately sends projected interfaces (which include an SMS message application interface, a video application interface, and a game application interface) at a frame rate of 60 FPS. Then, in a process in which a user operates one or more of the SMS message application interface, the video application interface, and the game application interface, the second device may obtain (for example, periodically obtain, in response to a received operation control event) window statuses corresponding to the SMS message application interface, the video application interface, and the game application interface. As shown in FIG. 8, it is assumed that the second device determines that an SMS message application window is currently minimized, a video application window is currently a non-minimized and non-focus window, and a game application window is currently a focus window. In this case, the second device adaptively adjusts, based on the obtained window statuses and by using a policy that sizes of frame rates are as follows: a focus window > a non-minimized and non-focus window > a minimized window, frame rates corresponding to the SMS message application interface, the video application interface, and the game application interface. For example, as shown in FIG. 8, based on window statuses of the SMS message application window, the video application window, and the game application window, the second device may adjust the frame rate of the SMS message application interface to 0 FPS, adjust the frame rate of the video application interface to 30 FPS, and do not adjust the frame rate of the game application interface (that is, still 60 FPS). Because the frame rate of the SMS message application interface is currently adjusted to 0 FPS, during video stream processing, the second device may not refresh the SMS message application interface, but sends, by using interface configuration information of the SMS message application corresponding to a previous image frame, the SMS message application interface for display. The SMS message application interface sent for display may still be the same as the SMS message application interface of a previous frame. That the second device adjusts the frame rate of the video application interface from 60 FPS to 30 FPS may specifically include: The second device starts a rendering task every other frame, renders the video application interface in the video application window, and sends a rendered video application interface for display. That the second device sends the game application interface for display may specifically include: The second device starts a rendering task for each frame of a game application interface obtained after the cutting, renders the game application interface in the game application window, and sends the game application interface for display.

According to the method provided in Embodiment 1 of this application, the second device obtains window statuses of different projected windows, to allocate a GPU resource and/or a processing capability of a device on demand based on the window statuses of the different projection windows. For example, a GPU resource and/or a processing capability are tilted to an application interface (for example, an application interface in a focus window) with a higher user experience requirement, and the GPU resource and/or the processing capability allocated by a device to an application interface (for example, an application interface in a minimized window) with a lower user experience requirement are reduced. In this manner, load of the second device can be reduced while the smoothness and the definition of the projected picture are ensured. Alternatively, in the foregoing on-demand resource allocation manner, when a processing capability of the second device is limited, the smoothness and the definition of the projected picture can be ensured.

### Embodiment 2

In Embodiment 2 of this application, the second device may adaptively and dynamically adjust, based on application categories corresponding to a plurality of application interfaces projected by the first device to the second device, frame rates corresponding to different application interfaces, to reduce pressure of a GPU of the second device, so as to ensure smoothness and definition of a projected picture.

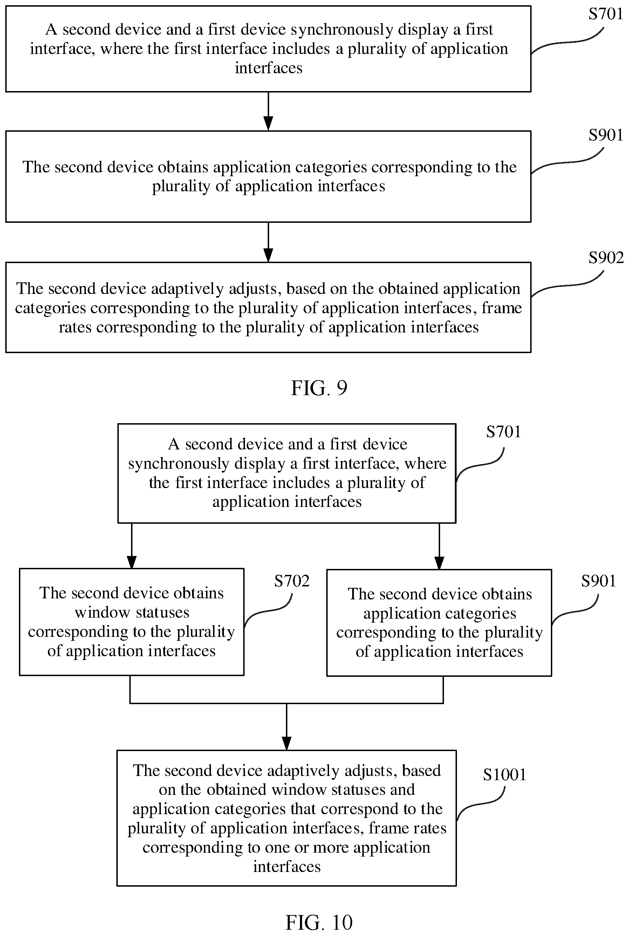

FIG. 9 is a flowchart of another multi-window projection method according to an embodiment of this application. As shown in FIG. 9, the multi-window projection method provided in this embodiment of this application may include the following steps S701, S901, and S902.

S701: The second device and the first device synchronously display a first interface, where the first interface includes a plurality of application interfaces.

In this embodiment of this application, that the second device and the first device synchronously display a first interface means that the second device synchronously displays the first interface projected by the first device to the second device. The first interface is a combination of the plurality of application interfaces.

For example, it is assumed that the first device is a mobile phone 110, and the mobile phone 110 projects a home screen of the mobile phone 110, an SMS message application interface, a video application interface, and a game application interface to a notebook computer 120 in a same-source projection manner. In this case, the first interface is shown in FIG. 1C, and includes the mobile phone home screen, the SMS message application interface, the video application interface, and the game application interface.

For another example, the first device is a mobile phone 110, and the mobile phone 110 projects an SMS message application interface, a video application interface, and a game application interface to a notebook computer 120 in a different-source projection manner. In this case, the first interface is shown in FIG. 2C, and includes the SMS message application interface, the video application interface, and the game application interface.

S901: The second device obtains application categories corresponding to the plurality of application interfaces.

The application categories may include but are not limited to an instant messaging category, a video category, a game category, an office category, a social category, a life category, a shopping category, a function category, or the like.

The first interface shown in FIG. 1C is used as an example. The home screen of the mobile phone 110 may be understood as a function category application, the SMS message application may be understood as an instant messaging category application, the video application may be understood as a video category application, and the game application may be understood as a game category application. The first interface shown in FIG. 2C is used as an example. The SMS message application may be understood as an instant messaging category application, the video application may be understood as a video category application, and the game application may be understood as a game category application.

In this embodiment of this application, the second device may obtain, from the first device, the application categories corresponding to the plurality of application interfaces projected by the first device to the second device. For example, the application categories corresponding to the plurality of application interfaces may be determined by attributes and/or functions of corresponding applications in a video stream from the first device. For example, the second device may determine, based on an application development attribute and/or an application data configuration obtained from the first device, the application categories corresponding to the plurality of application interfaces.

In some embodiments, the second device may periodically obtain, from the first device, the application categories corresponding to the plurality of application interfaces. For example, the second device may periodically obtain, based on a preset period, the window statuses corresponding to the plurality of application interfaces. The preset period may be preset in the second device. For example, the preset period may be 3 seconds (seconds, s).

In some other embodiments, the second device may obtain, from the first device in response to a received operation control event from a user, the application categories corresponding to the plurality of application interfaces. For example, the second device may obtain, in response to an operation control event received by an input/output device driver or a sensor driver from a user, the application categories corresponding to the plurality of application interfaces. For example, the operation control event may be an operation control event performed by the user on any one of the plurality of application interfaces.

S902: The second device adaptively adjusts, based on the obtained application categories corresponding to the plurality of application interfaces, frame rates corresponding to the plurality of application interfaces.

The second device may adaptively adjust, based on a preset policy (for example, a second preset policy), the frame rates corresponding to the plurality of application interfaces. The second preset policy is related to the application categories.

It may be understood that, when interfaces of applications of different categories are rendered, to ensure good application function completeness and user experience, requirements for a resource (for example, a GPU resource), requirements for a processing capability (for example, a GPU processing capability), and the like of a device are different. For example, because a game category application needs to present a rich picture to a user and ensure a small delay, the game category application has a highest requirement for smoothness, definition, delay, and the like of the picture. Therefore, when an interface of the game category application is rendered, a requirement for the resource, the processing capability, and the like of the device is high. During rendering, a video category application has a lower requirement for the resource, the processing capability, and the like of the device than a game category application. Because data is usually transmitted at intervals, an instant messaging application has a lowest requirement for the resource, the processing capability, and the like of the device during rendering.

Therefore, in some embodiments, the frame rates corresponding to the plurality of application interfaces are adaptively adjusted based on the application categories corresponding to the plurality of application interfaces, so that the resource and/or the processing capability can be tilted to rendering of an interface (for example, a game category application) of an application with a higher requirement, and the resource and/or the processing capability allocated by a device to rendering of an interface (for example, a function category application) of an application with a lower requirement can be reduced.

Based on the foregoing reason, in some embodiments, the second device may adaptively adjust, based on the following second preset policy, the frame rates corresponding to the plurality of application interfaces: adaptively adjusting, in descending order based on degrees of requirements for the resource and/or the processing capability, the frame rates corresponding to the plurality of application interfaces.

For example, if the degrees of the requirements for the resource and the processing capability in descending order are as follows: a game category application > a video category application > an instant messaging category application, sizes of the frame rate may be adjusted as follows: a game category application interface > a video category application interface > an instant messaging category application interface. For example, a frame rate of the game category application interface may be adjusted to 60 FPS (that is, refresh of 60 times per second is performed); a frame rate of the video category application interface may be adjusted to 24 FPS (that is, refresh of 24 times per second is performed); and a frame rate of the instant messaging category application interface may be adjusted to 24 FPS (that is, refresh of 24 times per second is performed).

According to the method provided in Embodiment 2 of this application, the second device obtains application categories of different projected applications, to allocate a resource and/or a processing capability of a device on demand based on the application categories of the different applications. For example, the resource and/or the processing capability of a device are tilted to rendering of an interface (for example, a game category application) of an application with a higher requirement, and the resource and/or the processing capability allocated by a device to rendering of an interface (for example, a function category application) of an application with a lower requirement can be reduced. In the foregoing on-demand resource allocation manner, load of the second device can be reduced while the smoothness and the definition of the projected picture are ensured. Alternatively, in the foregoing on-demand resource allocation manner, when a processing capability of the second device is limited, the smoothness and the definition of the projected picture can be ensured.

It should be noted that the solution provided in Embodiment 2 provided in embodiments of this application may be combined with the solution provided in Embodiment 1, to adaptively and dynamically adjust the frame rates corresponding to the different application interfaces, and reduce the pressure of the GPU of the second device, so as to ensure the smoothness and the definition of the projected picture.

For example, FIG. 10 is a flowchart of still another multi-window projection method according to an embodiment of this application. As shown in FIG. 10, the multi-window projection method provided in this embodiment of this application may include S701, S702, S901, and S1001. When the second device performs the foregoing steps S702 and S901, the second device may adaptively adjust, by using S1001, frame rates corresponding to different application interfaces by comprehensively considering the window statuses and the application categories that correspond to the different application interfaces.

S1001: The second device adaptively adjusts, based on the obtained window statuses and application categories that correspond to the plurality of application interfaces, frame rates corresponding to one or more application interfaces.

In some embodiments, the second device may adaptively adjust, based on different weights that correspond to the window statuses and application categories, the frame rate corresponding to the one or more application interfaces. The weight is used to indicate a referable degree or an importance degree of a corresponding factor. For example, even if an application has a high requirement for a resource and/or a processing capability, if a window status corresponding to the application indicates that an interface of the application receives low attention from a user (if the window status is a minimized window), the application almost does not need to occupy the resource and/or the processing capability. Therefore, the weight of the window status is usually greater than that of the application category. In other words, when the window statuses and the application categories that correspond to the different application interfaces are comprehensively considered, the window statuses corresponding to the different application interfaces are first considered.

In some embodiments, the second device may adaptively adjust, based on window statuses and the application categories, the frame rate corresponding to the one or more application interfaces by using a policy of preferably selecting a minimum value.

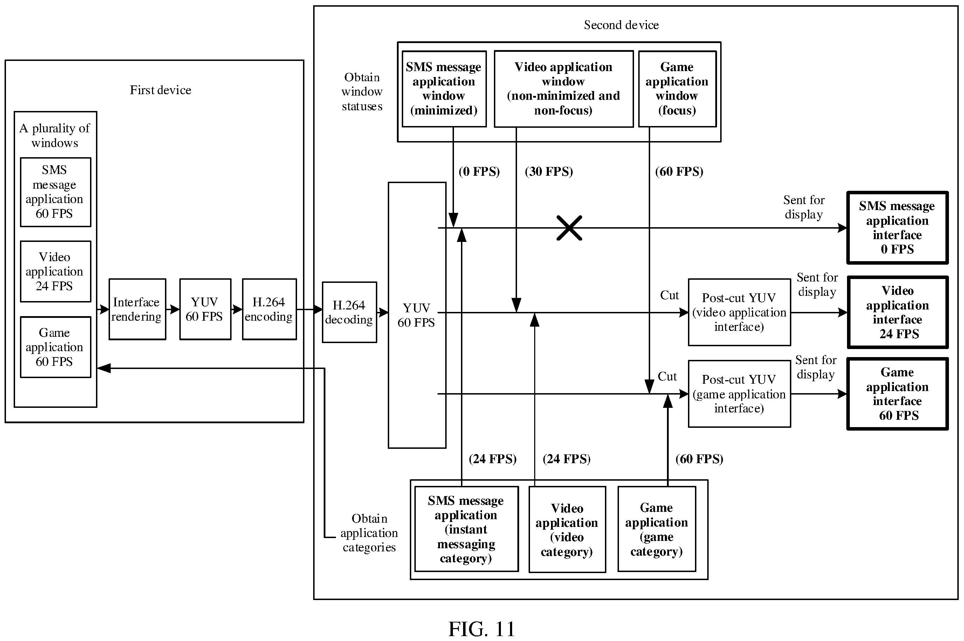

FIG. 11 is a schematic diagram of another multi-window collaborative projection process according to an embodiment of this application by using an example in which the first device projects an SMS message application, a video application, and a game application to the second device. During initial projection, the first device performs interface rendering on an SMS message application, a video application, and a game application started on the first device together, performs color space conversion (FIG. 11 uses conversion-to-YUV color encoding as an example), and performs video encoding (FIG. 11 uses an example in which the H.264 standard is used for video encoding), and sends an encoded standard video stream to the second device. The second device completes video decoding (FIG. 11 uses an example in which the H.264 standard is used for video decoding), color space conversion (FIG. 11 uses conversion-to-YUV color decoding as an example), picture cutting, and sending for display.

It is assumed that, currently, the second device separately sends projected interfaces (which include an SMS message application interface, a video application interface, and a game application interface) at a frame rate of 60 FPS. Then, in a process in which a user operates one or more of the SMS message application interface, the video application interface, and the game application interface, the second device may obtain (for example, periodically obtain, in response to a received operation control event) window statuses and application categories that correspond to the SMS message application interface, the video application interface, and the game application interface. As shown in FIG. 11, it is assumed that the second device determines that an SMS message application window is currently minimized, a video application window is currently a non-minimized and non-focus window, and a game application window is currently a focus window. In addition, the second device determines that the SMS message application is an instant messaging category application; the video application is a video category application; and the game application is a game category application. In this case, the second device comprehensively considers the obtained window statuses and the application categories, and adaptively adjusts the frame rates corresponding to the SMS message application interface, the video application interface, and the game application interface by using a policy that sizes of the frame rates are as follows: a game application window > a video application window > an SMS message application window. For example, as shown in FIG. 11, based on window statuses and application categories of the SMS message application window, the video application window, and the game application window, the second device may adjust the frame rate of the SMS message application interface to 0 FPS, adjust the frame rate of the video application interface to 24 FPS, and do not adjust the frame rate of the game application interface (that is, still 60 FPS). Because the frame rate of the SMS message application interface is currently adjusted to 0 FPS, during video stream processing, the second device may not cut the SMS message application interface. For example, the SMS message application interface sent for display may still be the same as the SMS message application interface of a previous frame.

In some embodiments, the embodiment shown in FIG. 7, FIG. 9, or FIG. 10 of this application may be triggered by a resource occupation status and/or a processing capability of the second device. For example, when the second device performs the foregoing step S701, if load of a GPU of the second device is excessively high, the second device performs S702 and S703 shown in FIG. 7, or the second device performs S902 and S903 shown in FIG. 9, or the second device performs S702, S901, and S1001 shown in FIG. 10.

In some embodiments, if one or more of the following conditions are met, it may be determined that the load of the GPU is excessively high: a decoding delay of the GPU is greater than a delay threshold, a load rate of the GPU exceeds a load threshold (for example, 80%), and a quantity of projected application interfaces is greater than a quantity threshold (for example, two).

For example, the load of the GPU is determined based on whether the decoding delay of the GPU is greater than the preset threshold. For example, when the second device performs the foregoing step S701, if the decoding delay of the GPU of the second device is greater than the preset threshold (for example, 10 ms), the second device performs S702 and S703 shown in FIG. 7, to reduce a frame rate of an interface of an application with a low user experience requirement, and ensure a frame rate of an interface of an application with a high user experience requirement. For example, a frame rate of an interface corresponding to the non-focus window (for example, the minimized window or the non-minimized and non-focus window) shown in FIG. 8 is reduced, to ensure a frame rate of an interface corresponding to the focus window.

For another example, when the second device performs the foregoing step S701, if the decoding delay of the GPU of the second device is greater than the preset threshold (for example, 10 ms), the second device performs S902 and S903 shown in FIG. 9, to reduce a frame rate of an application interface with a low requirement for a resource and/or a processing capability of a device, and ensure a frame rate of an application interface with a high requirement for the resource and/or the processing capability of the device. For example, frame rates of interfaces of the SMS message application and the video application are reduced, to ensure a frame rate of an interface of the game application.

For another example, when the second device performs the foregoing step S701, if the decoding delay of the GPU of the second device is greater than the preset threshold (for example, 10 ms), the second device performs S702, S901, and S1001 shown in FIG. 10, to reduce a frame rate of an interface of an application with a low user experience requirement and ensure a frame rate of an interface of application with a high user experience requirement and a high requirement for a resource and/or a processing capability of a device. For example, a frame rate of an interface corresponding to the non-focus window (for example, the minimized window or the non-minimized and non-focus window) shown in FIG. 11 are reduced, to ensure a frame rate of an interface of the game application whose window status is a focus window and whose requirement for a resource and/or a processing capability of a device is high.

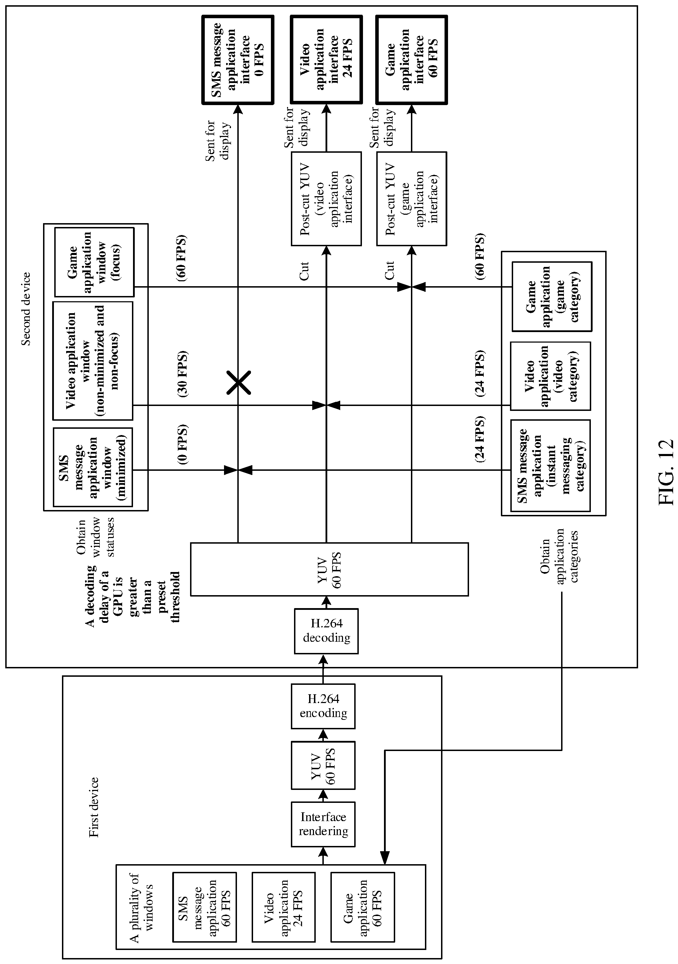

FIG. 12 is a schematic diagram of still another multi-window collaborative projection process according to an embodiment of this application by using an example in which the first device projects an SMS message application, a video application, and a game application to the second device. During initial projection, the first device performs interface rendering on an SMS message application, a video application, and a game application started on the first device together, performs color space conversion (FIG. 12 uses conversion-to-YUV color encoding as an example), and performs video encoding (FIG. 12 uses an example in which the H.264 standard is used for video encoding), and sends an encoded standard video stream to the second device. The second device completes video decoding (FIG. 12 uses an example in which the H.264 standard is used for video decoding), color space conversion (FIG. 12 uses conversion-to-YUV color decoding as an example), picture cutting, and sending for display.

It is assumed that currently, the second device separately sends projected interfaces (which include an SMS message application interface, a video application interface, and a game application interface) at a frame rate of 60 FPS. Then, if the second device determines, in a process in which a user operates one or more of the SMS message application interface, the video application interface, and the game application interface, that a decoding delay of the GPU of the second device is greater than a preset threshold, the second device obtains (for example, obtains periodically or in response to a received operation control event) window statuses and application categories that correspond to the SMS message application interface, the video application interface, and the game application interface. As shown in FIG. 12, it is assumed that the second device determines that an SMS message application window is currently minimized, a video application window is currently a non-minimized and non-focus window, and a game application window is currently a focus window. In addition, the second device determines that the SMS message application is an instant messaging category application; the video application is a video category application; and the game application is a game category application. In this case, the second device comprehensively considers the obtained window statuses and application categories, and adaptively adjusts the frame rates corresponding to the SMS message application interface, the video application interface, and the game application interface by using a policy that sizes of the frame rates are as follows: a game application window > a video application window > an SMS message application window. For example, as shown in FIG. 12, based on window statuses and application categories of the SMS message application window, the video application window, and the game application window, the second device may adjust the frame rate of the SMS message application interface to 0 FPS, adjust the frame rate of the video application interface to 24 FPS, and do not adjust the frame rate of the game application interface (that is, still 60 FPS). Because the frame rate of the SMS message application interface is currently adjusted to 0 FPS, during video stream processing, the second device may not cut the SMS message application interface. For example, the SMS message application interface sent for display may still be the same as the SMS message application interface of a previous frame.

### Embodiment 3

In Embodiment 3 of this application, the second device may adaptively and dynamically adjust one or more of an application display region size (display size), display resolution (display resolution), video resolution, and the like based on a quantity of application interfaces projected by the first device to the second device, to ensure smoothness and definition of a projected picture.

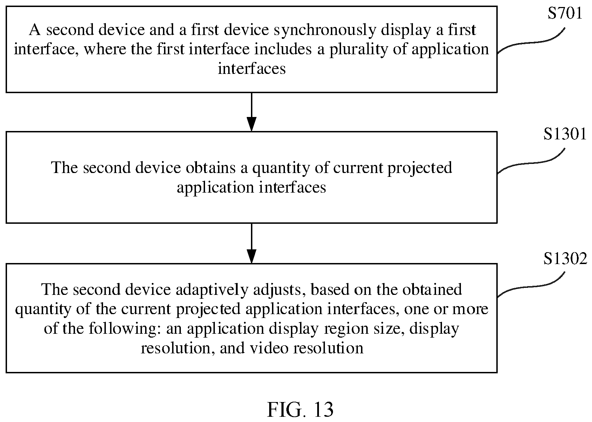

FIG. 13 is a flowchart of yet another multi-window projection method according to an embodiment of this application. As shown in FIG. 13, the multi-window projection method provided in this embodiment of this application may include the following steps S701, S1301 and S1302.

S701: The second device and the first device synchronously display a first interface, where the first interface includes a plurality of application interfaces.

For a specific description of S701, refer to the description of S701 in Embodiment 1.

S1301: The second device obtains a quantity of current projected application interfaces.

The quantity of the projected application interfaces is a quantity of application interfaces projected by the first device to the second device.

The first interface shown in FIG. 1C is used as an example. The home screen of the mobile phone 110, the SMS message application interface, the video application interface, and the game application interface are the application interfaces projected by the first device to the second device. In this case, the quantity of the current projected application interfaces obtained by the second device is four.

The first interface shown in FIG. 2C is used as an example. The SMS message application interface, the video application interface, and the game application interface are the application interfaces projected by the first device to the second device. In this case, the quantity of the current projected application interfaces obtained by the second device is three.

For example, the second device may obtain the quantity of the current projected application interfaces from the first device, for example, from a standard video stream of the first device.

S1302: The second device adaptively adjusts, based on the obtained quantity of the current projected application interfaces, one or more of the following: an application display region size, display resolution, and video resolution.

An application display region is a display region that is of the second device and that is used to display an application interface. The application display region size (display size) is a size of the display region. The display resolution is used to represent a quantity of pixels that can be displayed per unit area in a display region that is of a display of the second device and that is used to display an application interface. The video resolution is used to represent a quantity of pixels that can be displayed in a unit image area of an image frame corresponding to a video stream.

In this embodiment of this application, the second device may adaptively adjust the one or more of the application display region size, the display resolution, and the video resolution based on a preset policy and the quantity of the current projected application interfaces.

For example, the second device may increase a length or a width (the application display region size) of the application display region based on an increase in the quantity of the current projected application interfaces, a multiple, an exponent, or a preset calculation formula. For example, if the quantity of the current projected application interfaces is one, the display size may be a₁×b₁, where a₁ is a length of the display, and bi is a width of the display. If the quantity of the current projected application interfaces is two, the display size may be 2a₁×b₁, where 2a₁ is a length of the display, and bi is a width of the display. If the quantity of the current projected application interfaces is three, the display size may be 3a₁×b₁, where 3a₁ is a length of the display, and bi is a width of the display. For example, a₁ may be a width of a display of the first device, and bi may be a height of the display of the first device; or a₁ may be a height of a display of the first device, and bi may be a width of the display of the first device.

For example, the second device may increase, based on an increase in the quantity of the current projected application interfaces, a multiple, an exponent, or based on a preset calculation formula, a quantity of pixels that can be displayed in horizontal dimension or a quantity of pixels that can be displayed in vertical dimension (that is, the display resolution) on the display. For example, if the quantity of the current projected application interfaces is one, the display resolution may be a₂×b₂ pixels (pixels, p), where a₂ is a quantity of pixels that can be displayed in horizontal dimension on the display of the second device, and b₂ is a quantity of pixels that can be displayed in vertical dimension on the display of the second device. If the quantity of the current projected application interfaces is two, the display resolution may be a₂×2b₂, where a₂ is a quantity of pixels that can be displayed in horizontal dimension on the display of the second device, and 2b₂ is a quantity of pixels that can be displayed in vertical dimension on the display of the second device. If the quantity of the current projected application interfaces is three, the display resolution may be a₂×3b₂ pixels (pixels, p), where a₂ is a quantity of pixels that can be displayed in horizontal dimension on the display of the second device, and 3b₂ is a quantity of pixels that can be displayed in vertical dimension on the display of the second device.

For example, the second device may reduce, based on an increase in the quantity of the current projected application interfaces and based on the display resolution of the second device, a multiple, an exponent, or a preset calculation formula, a quantity of pixels (that is, the video resolution, also referred to as image resolution) that can be displayed in an image per unit area (for example, per inch). For example, if the quantity of the current projected application interfaces is one, and the display resolution of the second device is a₂×b₂, the video resolution may be a₃×b₃, where a₃=a₂, and b₃=b₂. as is a quantity of pixels that can be displayed in an image per unit area (for example, per inch) in horizontal dimension, and b₃ is a quantity of pixels that can be displayed in an image per unit area (for example, per inch) in vertical dimension. If the quantity of the current projected application interfaces is two, and the display resolution of the second device is a₂×2b₂, the video resolution may be a₃×b₃, where a₃=a₂/2, and b₃=b₂. a₂/2 (that is, a₃) is a quantity of pixels that can be displayed in an image per unit area (for example, per inch) in horizontal dimension, and b₂ (that is, b₃) is a quantity of pixels that can be displayed in an image per unit area (for example, per inch) in vertical dimension. If the quantity of the current projected application interfaces is three, and the display resolution of the second device is a₂×3b₂, the video resolution may be a₃×b₃, where a₃=a₂/2, and b₃=3b₂/2. a₂/2 (that is, a₃) is a quantity of pixels that can be displayed in an image per unit area (for example, per inch) in horizontal dimension, and 3b₂/2 (that is, b₃) is a quantity of pixels that can be displayed in an image per unit area (for example, per inch) in vertical dimension.

According to the method provided in Embodiment 3 of this application, the second device adaptively adjusts the one or more of the application display region size, the display resolution, and the video resolution based on the quantity of the application interfaces projected by the first device to the second device. According to this solution, the display definition may be adaptively adjusted based specific load of the GPU of the second device. For example, when the quantity of the application interfaces is small and the load of the GPU is low, high display resolution and video resolution are ensured, to ensure interface definition; or when the quantity of the application interfaces is large and a processing capability of the GPU is limited (that is, the load is high), the display resolution and video resolution are reduced, to ensure interface smoothness.

It should be noted that the solution provided in Embodiment 3 provided in embodiments of this application may be combined with the solution provided in Embodiment 1 and/or Embodiment 2, to adaptively and dynamically adjust frame rates, display resolution, and video resolution corresponding to different application interfaces, and reduce pressure of the GPU of the second device, so as to ensure the smoothness and the definition of the projected picture.

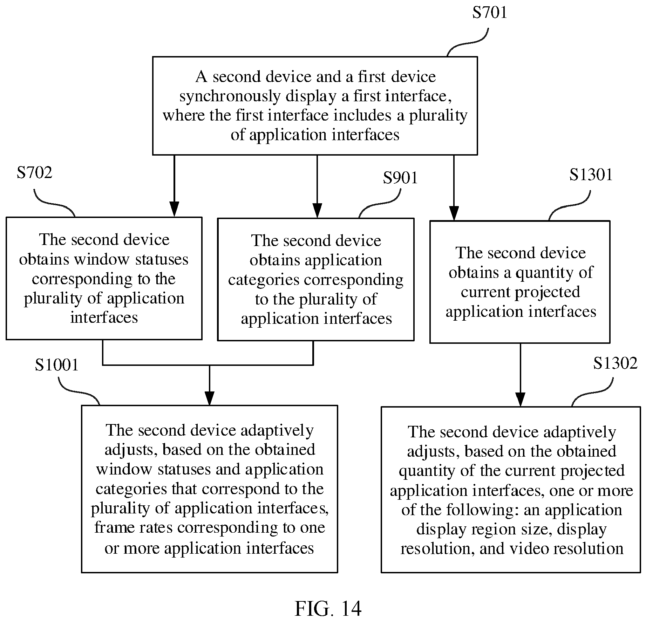

For example, FIG. 14 is a flowchart of still yet another multi-window projection method according to an embodiment of this application. As shown in FIG. 14, the multi-window projection method provided in this embodiment of this application may include S701, S702, S901, and S1001, and include S701, S1301, and S1302.

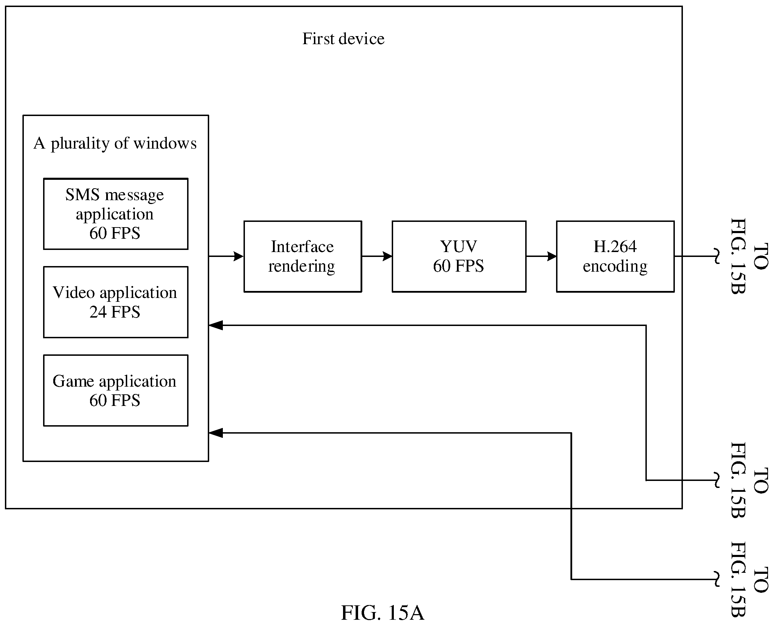

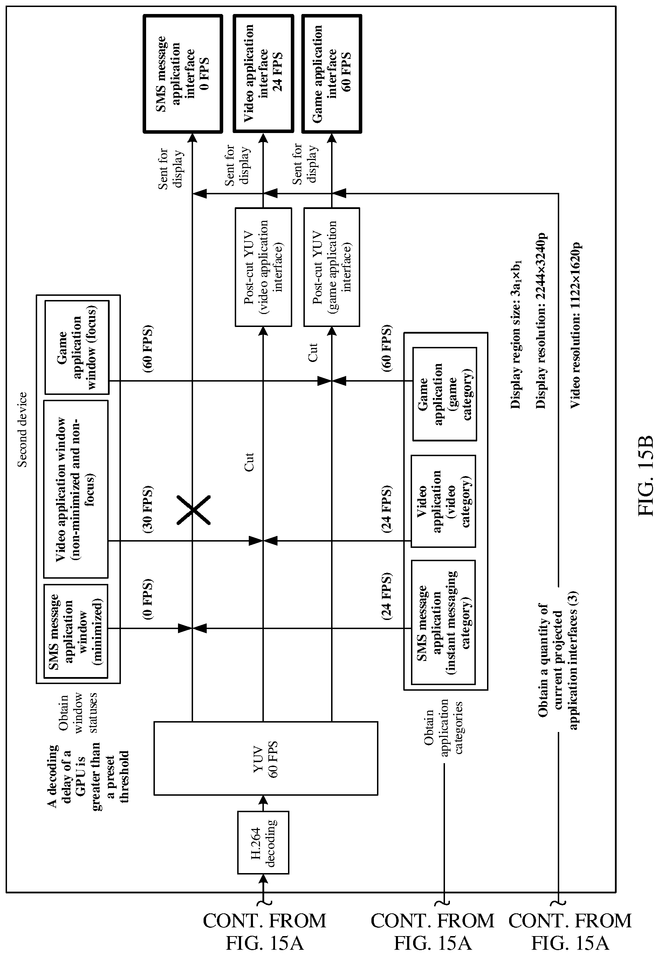

FIG. 15A and FIG. 15B are a schematic diagram of yet another multi-window collaborative projection process according to an embodiment of this application by using an example in which the first device projects an SMS message application, a video application, and a game application to the second device. During initial projection, the first device performs interface rendering on an SMS message application, a video application, and a game application started on the first device together, performs color space conversion (FIG. 15A uses conversion-to-YUV color encoding as an example), and performs video encoding (FIG. 15A uses an example in which the H.264 standard is used for video encoding), and sends an encoded standard video stream to the second device. The second device completes video decoding (FIG. 15B uses an example in which the H.264 standard is used for video decoding), color space conversion (FIG. 15B uses conversion-to-YUV color decoding as an example), picture cutting, and sending for display.

It is assumed that currently, the second device separately sends projected interfaces (which include an SMS message application interface, a video application interface, and a game application interface) at a frame rate of 60 FPS. Then, if the second device determines, in a process in which a user operates one or more of the SMS message application interface, the video application interface, and the game application interface, that a decoding delay of the GPU of the second device is greater than a preset threshold, the second device obtains (for example, obtains periodically or in response to a received operation control event) window statuses and application categories that correspond to the SMS message application interface, the video application interface, and the game application interface. As shown in FIG. 15A and FIG. 15B, it is assumed that the second device determines that an SMS message application window is currently minimized, a video application window is currently a non-minimized and non-focus window, and a game application window is currently a focus window. In addition, the second device determines that the SMS message application is an instant messaging category application; the video application is a video category application; and the game application is a game category application. In this case, the second device comprehensively considers the obtained window statuses and application categories, and adaptively adjusts the frame rates corresponding to the SMS message application interface, the video application interface, and the game application interface by using a policy that sizes of the frame rates are as follows: a game application window > a video application window > an SMS message application window. For example, as shown in FIG. 15A and FIG. 15B, based on window statuses and application categories of the SMS message application window, the video application window, and the game application window, the second device may adjust the frame rate of the SMS message application interface to 0 FPS, adjust the frame rate of the video application interface to 24 FPS, and do not adjust the frame rate of the game application interface (that is, still 60 FPS). Because the frame rate of the SMS message application interface is currently adjusted to 0 FPS, during video stream processing, the second device may not cut the SMS message application interface. For example, the SMS message application interface sent for display may still be the same as the SMS message application interface of a previous frame.

Further, as shown in FIG. 15A and FIG. 15B, the second device may obtain a quantity of current projected application interfaces from the first device, to adaptively adjust an application display region size, display resolution, and video resolution of the SMS message application, the video application, and the game application shown in FIG. 15A and FIG. 15B based on the quantity of the current projected application interfaces. For example, as shown in FIG. 15A and FIG. 15B, if the second device determines that the quantity of the current projected application interfaces is three, the second device may determine that the display size of the SMS message application, the video application, and the game application is 3a₁×b₁, the display resolution is 2244×3240p, and the video resolution is 1122×1620p.

It should be understood that the solutions in embodiments of this application may be properly combined for use, and explanations or descriptions of terms in embodiments may be cross-referenced or explained in embodiments. This is not limited.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that, to implement the functions in any one of the foregoing embodiments, an electronic device (including the first device and the second device) includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is implemented by hardware or hardware driven by computer software depends on particular applications and design constraints of the technical solutions. A person skilled in the art may use different methods to implement the described functions of each particular application, but it should not be considered that the implementation goes beyond the scope of this application.

In embodiments of this application, an electronic device (including the first device and the second device) may be divided into function modules. For example, each function module may be obtained through division based on each corresponding function, or two or more functions may be integrated into one processing module. The integrated module may be implemented in a form of hardware, or may be implemented in a form of a software function module. It should be noted that, in embodiments of this application, module division is an example, and is merely a logical function division. In actual implementation, another division manner may be used.

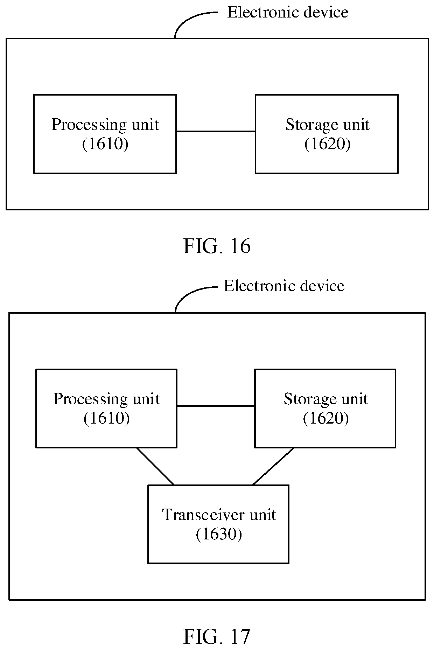

For example, when each function module is obtained through division in an integrated manner, FIG. 16 is a block diagram of a structure of an electronic device according to an embodiment of this application. For example, the electronic device may be a first device or a second device. As shown in FIG. 16, the electronic device may include a processing unit 1610 and a storage unit 1620.

When the electronic device is the second device, the processing unit 1610 is configured to: obtain first information when the second device displays a first interface including a plurality of application interfaces synchronously with the first device; and adaptively adjust, based on the obtained first information, one or more of the following: frame rates corresponding to the plurality of application interfaces, sizes of application display regions corresponding to the plurality of application interfaces, display resolution of the second device, or video resolution corresponding to the plurality of application interfaces. For example, the processing unit 1610 is configured to support the electronic device in performing the foregoing step S702, S703, S901, S902, S1001, S1301, or S1302, and/or another process of the technology described in this specification. The storage unit 1620 is configured to store a computer program and implement processed data, a processing result and/or the like in the method provided in embodiments of this application.

In a possible structure, as shown in FIG. 17, an electronic device may further include a transceiver unit 1630. The transceiver unit 1630 is configured to communicate with the second device, for example, receive interface configuration information and a control instruction from a projected interface of the first device, and for another example, send an operation control event from a user to the first device.

It should be noted that the transceiver unit 1630 may include a radio frequency circuit. Specifically, the electronic device may receive and send a radio signal by using the radio frequency circuit. The radio frequency circuit usually includes but is not limited to an antenna, at least one amplifier, a transceiver, a coupler, a low noise amplifier, a duplexer, and the like. In addition, the radio frequency circuit may further communicate with another device through wireless communication. The wireless communication may use any communication standard or protocol, including but not limited to a global system for mobile communications, a general packet radio service, code division multiple access, wideband code division multiple access, long term evolution, an email, an SMS message service, and the like.

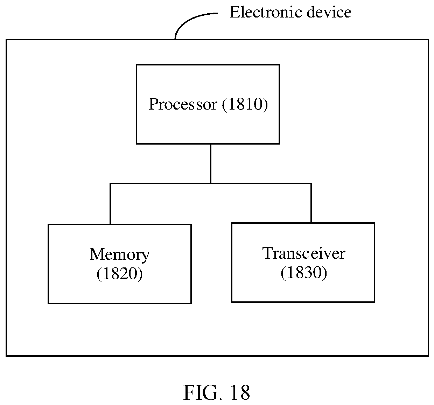

It should be understood that each module in the electronic device may be implemented in a form of software and/or hardware. This is not specifically limited herein. In other words, the electronic device is presented in a form of a function module. The "module" herein may be an application-specific integrated circuit ASIC, a circuit, a processor and a memory that execute one or more software or firmware programs, an integrated logic circuit, and/or another component that can provide the foregoing functions. Optionally, in a simple embodiment, a person skilled in the art may figure out that a portable device may be in a form shown in FIG. 18. The processing unit 1610 may be implemented by using a processor 1810 shown in FIG. 18. The transceiver unit 1630 may be implemented by using a transceiver 1830 shown in FIG. 18. Specifically, the processor is implemented by executing a computer program stored in a memory. Optionally, the memory is a storage unit in a chip, for example, a register or a cache. Alternatively, the storage unit may be a storage unit that is in a computer device and that is located outside the chip, for example, a memory 1820 shown in FIG. 18.

In an optional manner, when software is used to implement data transmission, the data transmission may be completely or partially implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, or microwave). The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital video disk (digital video disk, DVD)), a semiconductor medium (for example, a solid state disk (solid state disk, SSD)), or the like.

Method or algorithm steps described in combination with embodiments of this application may be implemented by hardware, or may be implemented by a processor by executing software instructions. The software instructions may include a corresponding software module. The software module may be stored in a RAM, a flash memory, a ROM, an EPROM, an EEPROM, a register, a hard disk, a removable hard disk, a CD-ROM, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a detection apparatus. Certainly, the processor and the storage medium may alternatively exist in the detection apparatus as discrete components.

Based on the descriptions of the foregoing implementations, it may be clearly understood by a person skilled in the art that, for ease and brevity of description, division of the foregoing function modules is merely used as an example for illustration. In actual application, the foregoing functions may be allocated to different function modules and implemented based on a requirement, that is, an internal structure of an apparatus is divided into different function modules, to implement all or some of the functions described above.

## Claims

1. A multi-window projection method, applied to a scenario in which a first device performs projection onto a second device, wherein the method comprises:
obtaining, by the second device, first information when displaying a first interface synchronously with the first device, wherein the first interface comprises a plurality of application interfaces; and
adaptively adjusting, by the second device based on the obtained first information, one or more of the following: frame rates corresponding to the plurality of application interfaces, sizes of application display regions corresponding to the plurality of application interfaces, display resolution of the second device, or video resolution corresponding to the plurality of application interfaces.

2. The method according to claim 1, wherein the first information comprises window statuses corresponding to the plurality of application interfaces, and the first information is specifically used by the second device to adaptively adjust the frame rates corresponding to the plurality of application interfaces; and
the window statuses comprise a focus window, a non-minimized and non-focus window, and a minimized window.

3. The method according to claim 2, wherein that the second device adaptively adjusts, based on the obtained window statuses corresponding to the plurality of application interfaces, the frame rates corresponding to the plurality of application interfaces comprises:
adaptively adjusting, by the second device, the frame rates corresponding to the plurality of application interfaces based on the following first preset policy: a frame rate corresponding to the focus window > a frame rate corresponding to the non-minimized and non-focus window > a frame rate corresponding to the minimized window.

4. The method according to any one of claims 1 to 3, wherein the first information comprises application categories corresponding to the plurality of application interfaces, and the first information is specifically used by the second device to adaptively adjust the frame rates corresponding to the plurality of application interfaces; and
the application categories comprise one or more of a game category, a video category, an instant messaging category, an office category, a social category, a life category, a shopping category, and a function category.

5. The method according to claim 4, wherein the application categories comprise the game category, the video category, and the instant messaging category; and that the second device adaptively adjusts, based on the obtained application categories corresponding to the plurality of application interfaces, the frame rates corresponding to the plurality of application interfaces comprises:
adaptively adjusting, by the second device, the frame rates corresponding to the plurality of application interfaces based on the following second preset policy: a frame rate corresponding to a game category application interface > a frame rate corresponding to a video category application interface > a frame rate corresponding to an instant messaging category application interface.

6. The method according to any one of claims 1 to 5, wherein the obtaining, by the second device, first information when displaying a first interface synchronously with the first device comprises:
if it is determined that processing load of the second device is higher than a preset threshold, obtaining, by the second device, the first information when displaying the first interface synchronously with the first device.

7. The method according to claim 6, wherein the second device determines, based on one or more of the following, that the processing load of the second device is greater than the preset threshold: a decoding delay of a graphics processing unit GPU of the second device is greater than a delay threshold, a load rate of the GPU is greater than a load threshold, and a quantity of the plurality of application interfaces is greater than a quantity threshold.

8. The method according to any one of claims 1 to 7, wherein the first information comprises the quantity of the plurality of application interfaces, and the first information is specifically used by the second device to adaptively adjust one or more of the following: the sizes of the application display regions corresponding to the plurality of application interfaces, the display resolution of the second device, or the video resolution corresponding to the plurality of application interfaces.

9. The method according to claim 8, wherein
if the quantity of the plurality of application interfaces is one, the second device determines that the size of the application display region corresponding to the application interface is a₁×b₁, the display resolution of the second device is a₂×b₂, and the video resolution corresponding to the plurality of application interfaces is a₃×b₃, wherein
a₁ is a length of the application display region, and b₁ is a width of the application display region; a₂ is a quantity of pixels that can be displayed in horizontal dimension on a display of the second device, and b₂ is a quantity of pixels that can be displayed in vertical dimension on the display of the second device; and a₃ is a quantity of pixels that can be displayed in an image per unit area in horizontal dimension, b₃ is a quantity of pixels that can be displayed in an image per unit area in vertical dimension, a₃=a₂, and b₃=b₂.

10. The method according to claim 8, wherein
if the quantity of the plurality of application interfaces is two, the second device determines that the size of the application display region corresponding to the application interface is 2a₁×b₁, the display resolution of the second device is a₂×2b₂, and the video resolution corresponding to the plurality of application interfaces is a₃×b₃, wherein
2a₁ is a length of the application display region, and b₁ is a width of the application display region; a₂ is a quantity of pixels that can be displayed in horizontal dimension on a display of the second device, and 2b₂ is a quantity of pixels that can be displayed in vertical dimension on the display of the second device; and a₃ is a quantity of pixels that can be displayed in an image per unit area in horizontal dimension, b₃ is a quantity of pixels that can be displayed in an image per unit area in vertical dimension, a₃=a₂/2, and b₃=b₂.

11. The method according to claim 8, wherein
if the quantity of the plurality of application interfaces is three, the second device determines that the size of the application display region corresponding to the application interface is 3a₁×b₁, the display resolution of the second device is a₂×3b₂, and the video resolution corresponding to the plurality of application interfaces is a₃×b₃, wherein
3a₁ is a length of the application display region, and b₁ is a width of the application display region; a₂ is a quantity of pixels that can be displayed in horizontal dimension on a display of the second device, and 3b₂ is a quantity of pixels that can be displayed in vertical dimension on the display of the second device; and a₃ is a quantity of pixels that can be displayed in an image per unit area in horizontal dimension, b₃ is a quantity of pixels that can be displayed in an image per unit area in vertical dimension, a₃=a₂/2, and b₃=3b₂/2.

12. An electronic device, wherein the electronic device comprises:
a memory, configured to store a computer program;
a transceiver, configured to: receive or send a radio signal; and
a processor, configured to execute the computer program, so that the electronic device implements the method according to any one of claims 1 to 11.

13. A computer-readable storage medium, wherein the computer-readable storage medium stores computer program code; and when the computer program code is executed by a processing circuit, the method according to any one of claims 1 to 11 is implemented.

14. A chip system, wherein the chip system comprises a processing circuit and a storage medium, the storage medium stores computer program code, and when the computer program code is executed by the processing circuit, the method according to any one of claims 1 to 11 is implemented.

15. A computer program product, wherein the computer program product is configured to run on a computer, to implement the method according to any one of claims 1 to 11.
